# EUROPÄISCHE PATENTSCHRIFT

(11) **EP 3 530 038 B1**
(45) Veröffentlichungstag und Bekanntmachung des Hinweises auf die Patenterteilung: **22.07.2020**
(21) Anmeldenummer: 17793870.1
(22) Anmeldetag: 18.10.2017
(51) Int. Cl.: H04W 52/02

(54) **VARIABLE TEILPAKETLÄNGEN FÜR TELEGRAM SPLITTING IN NETZWERKEN MIT GERINGEM STROMVERBRAUCH**
VARIABLE SUB-PACKET LENGTHS FOR TELEGRAM SPLITTING IN NETWORKS HAVING LOW POWER CONSUMPTION
LONGUEURS DE SOUS-PAQUETS VARIABLES POUR LA SEGMENTATION DE TÉLÉGRAMMES DANS DES RÉSEAUX À FAIBLE CONSOMMATION D'ÉNERGIE

(30) Priorität: 24.10.2016 DE 102016220884
(43) Veröffentlichungstag der Anmeldung: 28.08.2019
(73) Patentinhaber: FRAUNHOFER-GESELLSCHAFT zur Förderung der angewandten Forschung e.V., 80686 München (DE); Friedrich-Alexander-Universität Erlangen-Nürnberg, 91054 Erlangen (DE)
(72) Erfinder: KILIAN, Gerd, 91058 Erlangen (DE); BERNHARD, Josef, 91058 Erlangen (DE); ROBERT, Jörg, 91054 Erlangen (DE); KNEISSL, Jakob, 91058 Erlangen (DE); WECHSLER, Johannes, 91058 Erlangen (DE); ERETH, Stefan, 91058 Erlangen (DE)
(74) Vertreter: Schlenker, Julian
(86) Internationale Anmeldenummer: PCT/EP2017/076585
(87) Internationale Veröffentlichungsnummer: WO 2018/077692

(56) Entgegenhaltungen:
- EP-A1- 2 914 039
- WO-A1-2011/003070
- US-A1- 2015 092 545

## Beschreibung

Ausführungsbeispiele der vorliegenden Erfindung beziehen sich auf einen Datensender zum Senden von Daten. Weitere Ausführungsbeispiele beziehen sich auf einen Datenempfänger zum Empfangen von Daten. Manche Ausführungsbeispiele beziehen sich auf variable Teilpaketlängen für Telegram Splitting in Netzwerken mit geringem Stromverbrauch.

In der DE 10 2011 082 098 B4 ist ein Verfahren für batteriebetriebene Sender beschrieben, bei dem das Datenpaket in Sendepakete unterteilt wird, die kleiner sind als die eigentliche Information, die übertragen werden soll (so genanntes Telegram Splitting (dt. Telegrammaufteilung)). Telegramme werden dabei auf mehrere Teilpakete aufgeteilt. Ein solches Teilpaket wird als Hop (dt. Sprung) bezeichnet. In einem Hop werden mehrere Informationssymbole übertragen. Die Hops werden auf einer Frequenz oder aber über mehrere Frequenzen verteilt, sog. Frequency Hopping (dt. Frequenzsprung), gesendet. Zwischen den Hops gibt es Pausen, in denen nicht gesendet wird.

In einem typischen Sensornetz werden mehrere 100.000 Sensorknoten mit nur einer Basisstation abgedeckt. Da die Sensorknoten über nur sehr kleine Batterien verfügen, ist eine Koordination der Übertragungen in den meisten Fällen kaum möglich. Durch das Telegram Splitting Verfahren wird hierfür eine sehr hohe Übertragungssicherheit erreicht.

In der WO 2015/128385 A1 wird eine Datensendeanordnung beschrieben, die ein Energy-Harvesting-Element als Energiequelle aufweist. Die Datensendeanordnung ist dabei ausgebildet, um Daten unter Verwendung des Telegram Splitting Verfahrens zu senden, wobei ein zum Senden anstehendes Teilpaket in Abhängigkeit von einer von der Energieversorgungseinrichtung bereitstellbaren elektrischen Energiemenge entweder gesendet wird, zwischengespeichert und später gesendet wird, oder verworfen wird.

In der Veröffentlichung [G. Kilian, H. Petkov, R. Psiuk, H. Lieske, F. Beer, J. Robert, and A. Heuberger, "Improved coverage for low-power telemetry systems using telegram splitting," in Proceedings of 2013 European Conference on Smart Objects, Systems and Technologies (SmartSysTech), 2013] wird eine verbesserte Reichweite für Niedrigenergietelemetriesysteme, die das Telegram Splitting Verfahren verwenden, beschrieben.

In der Veröffentlichung [G. Kilian, M. Breiling, H. H. Petkov, H. Lieske, F. Beer, J. Robert, and A. Heuberger, "Increasing Transmission Reliability for Telemetry Systems Using Telegram Splitting," IEEE Transactions on Communications, vol. 63, no. 3, pp. 949-961, Mar. 2015] wird eine verbesserte Übertragungssicherheit für Niedrigenergietelemetriesysteme, die das Telegram Splitting Verfahren verwenden, beschrieben.

In der US2016/0094269 A1 wird ein drahtloses Kommunikationssystem mit einer Mehrzahl von Basisstationen und einer Mehrzahl von Endpunkten beschrieben. Das Kommunikationssystem nutzt Telegramme mit einer CSS modulierten Präambel (CSS = Chirp Spread Spectrum, dt. Modulationsverfahren basierend auf dem so genannten Chirp-Impuls) gefolgt von Daten, wobei die Daten mit einer geringen Bandbreite moduliert sind als die Präambel.

Die EP 2 914 039 A1 beschreibt eine Datensendeanordnung. Die Datensendeanordnung umfasst eine Energieversorgungseinrichtung zur Versorgung der Datensendeanordnung mit elektrischer Energie; eine Einrichtung zum Ermitteln von Nutzdaten, die von einem mit der Datensendeanordnung verbundenen Sensorelement bereitgestellt werden; eine Einrichtung zum kanalcodieren der Nutzdaten, um kanalcodierte Daten zu erhalten; eine Einrichtung zum Aufteilen der kanalcodierten Daten in eine Mehrzahl von Datenpaketen mit einer Coderate kleiner eins; und eine Einrichtung zum Senden von Datenpaketen, die ausgebildet ist, um die Mehrzahl von Datenpaketen mit einem zeitlichen Abstand über einen Kommunikationskanal zu senden, sofern eine von der Energieversorgungseinrichtung bereitstellbare elektrische Energiemenge zum Senden der jeweiligen Datenpakete mit einer Standardsendeleistung ausreichend ist. Dabei ist die Einrichtung zum Senden von Datenpaketen ausgebildet, um ein zum Senden anstehendes Datenpaket der Mehrzahl von Datenpaketen mit einer reduzierten Sendeleistung zu senden, falls eine von der Energieversorgungseinrichtung bereitstellbare elektrischen Energiemenge zum Senden des jeweiligen Datenpakets mit der reduzierten Sendeleistung ausreichend ist, wobei die reduzierte Sendeleistung verglichen mit der Standardsendeleistung um höchstens 40 dB reduziert ist; und/oder ein zum Senden anstehendes Datenpaket der Mehrzahl von Datenpaketen nicht zu senden oder verzögert zu senden, falls eine von der Energieversorgungseinrichtung bereitstellbare elektrische Energiemenge zum Senden des jeweiligen Datenpakets nicht ausreichend ist.

Die US 2015/0092545 A1 beschreibt ein Kommunikationssystem in dem ein sog. kurzes Paket übertragen werden soll, obwohl in dem Kommunikationssystem ein sog. Legacy-Device vorhanden ist, welches das kurze Paket nicht empfangen kann. Hierzu wird das kurze Paket derart generiert, dass dessen Nutzdaten nicht länger sind als ein Abstand zwischen zweier Übertragungsrahmen (engl. inter-frame space) des Legacy-Device, und in dem Abstand zwischen den zwei Übertragungsrahmen übertragen.

Die WO 2011/003070 A1 bezieht sich auf einen Transmitter, der eine Gruppe von Bildern so codiert, dass kodierte Nutzdaten, welche ein I Frame und mehrere P oder B Frames umfassen, genau in eine Übertragungsintervall fallen, während sonstige Daten (z.B. Nulldaten, Overhead usw.) in sog. Ruhe-Intervalle (engl. quieting interval) fallen.

Der vorliegenden Erfindung liegt somit die Aufgabe zugrunde, ein Konzept zur Übertragung von Daten variabler Länge zu schaffen, welches einen geringen Overhead erfordert und/oder eine hohe Übertragungssicherheit liefert.

Diese Aufgabe wird durch die unabhängigen Patentansprüche gelöst.

Vorteilhafte Weiterbildungen finden sich in den abhängigen Patentansprüchen.

Ausführungsbeispiele schaffen einen Datensender zum Senden von Daten variabler Länge, wobei der Datensender ausgebildet ist, um die Daten variabler Länge auf eine vorgegebene Anzahl von Subdatenpaketen aufzuteilen und um die Subdatenpakete auszusenden.

Ausführungsbeispiele schaffen Datenempfänger zum Empfangen von Daten variabler Länge, wobei der Datenempfänger ausgebildet ist, um eine vorgegebene Anzahl von Subdatenpaketen zu empfangen, auf die die Daten variabler Länge aufgeteilt sind. Dadurch, dass die Daten variabler Länger unabhängig von der Länge derselben immer auf die gleiche Anzahl an Subdatenpaketen aufgeteilt werden, kann ein erforderlicher Overhead geringgehalten werden, da beispielsweise keine zusätzlichen Synchronisationssequenzen in zusätzlichen Datenpaketen übertragen werden müssen. Ferner kann eine Übertragungszeit geringgehalten werden, so dass die Wahrscheinlichkeit einer Störung der Übertragung weiterhin gering gehalten werden kann.

Bei Ausführungsbeispielen werden die Daten variabler Länge (unabhängig von einer Länge derselben) auf eine vorgegebene Anzahl von Subdatenpaketen aufgeteilt. Dementsprechend sind die Längen der einzelnen Subdatenpakete von der Länge der Daten variabler Länge abhängig.

Weitere Ausführungsbeispiele schaffen ein Verfahren zum Senden von Daten variabler Länge, wobei das Verfahren einen Schritt des Aufteilens der Daten variabler Länge auf eine vorgegebene Anzahl von Subdatenpaketen und einen Schritt des Aussendens der Subdatenpakete umfasst.

Weitere Ausführungsbeispiele schaffen ein Verfahren zum Empfangen von Daten variabler Länge, wobei das Verfahren einen Schritt des Empfangens einer vorgegebenen Anzahl von Subdatenpaketen, auf die die Daten variabler Länge aufgeteilt sind, und einen Schritt des Kombinierens der vorgegebenen Anzahl von Subdatenpaketen, um die Daten variabler Länge zu erhalten.

Weitere Ausführungsbeispiele schaffen ein Übertragungsverfahren zum Übertragen von Daten variabler Länge unter Verwendung einer fest vorgegebenen Anzahl von Subdatenpaketen, auf die die Daten variabler Länge aufgeteilt werden.

Im Folgenden werden bevorzugte Ausführungsbeispiele des Datensenders zum Senden von Daten variabler Länge beschrieben.

Bei Ausführungsbeispielen kann die vorgegebene Anzahl von Subdatenpaketen eine fest vorgegebene (oder nicht veränderliche) Anzahl von Subdatenpaketen sein. Der Datensender kann demnach ausgebildet sein, um die Daten variabler Länge (unabhängig von einer Länge derselben) immer auf die gleiche Anzahl von Subdatenpaketen aufzuteilen. Dementsprechend können die Längen der einzelnen Subdatenpakete von der Länge der Daten variabler Länge abhängig sein.

Bei Ausführungsbeispielen kann der Datensender ausgebildet sein, um die Subdatenpakete innerhalb eines vorgegeben Zeitintervalls auszusenden.

Beispielsweise können die Daten variabler Länge unter Verwendung der vorgegebenen Anzahl von Subdatenpaketen unabhängige von einer Länge der Daten variabler Länge (immer) innerhalb des vorgegeben Zeitintervalls ausgesendet werden.

Bei Ausführungsbeispielen kann der Datensender ausgebildet sein, um die Subdatenpakete zeitlich voneinander beabstandet auszusenden, so dass zwischen den Subdatenpaketen Sendepausen vorhanden sind.

Bei Ausführungsbeispielen kann der Datensender ausgebildet sein, um die Subdatenpakete mit einem vorgegebenen zeitlichen Abstand auszusenden, so dass der zeitliche Abstand zwischen den Subdatenpaketen unabhängig von einer Länge der Daten variabler Länge konstant ist.

Beispielsweise können die Pausen (Sendepausen) zwischen den Subdatenpaketen konstant bleiben wenn sich die Längen der Subdatenpakete (Subpaketlängen) (in Abhängigkeit von der Länge der Daten variabler Länge) ändern. Zum Beispiel können drei Subdatenpakete eine Länge von jeweils 24 Symbolen aufweisen, wobei die Pausen 10 ms und 15 ms betragen. Wenn die Längen der Subdatenpakete bedingt durch eine Länge der Daten variabler Länge vergrößert werden und z.B. 34 Symbole pro Subdatenpaket ergeben, dann betragen die Pausen immer noch 10 ms und 15 ms.

Bei Ausführungsbeispielen kann der Datensender ausgebildet sein, um die Subdatenpakete mit einem von der Länge der Daten variabler Länge abhängigen zeitlichen Abstand auszusenden, so dass ein zeitlicher Abstand zwischen vorgegebenen Bereichen (z.B. Subdatenpaketanfang, Subdatenpaketmitte, Subdatenpaketende oder eine (Teil- )Synchronisationssequenz) der Subdatenpakete unabhängig von einer Länge der Daten variabler Länge konstant ist.

Beispielsweise können die Subdatenpakete so ausgesendet werden, dass ein Abstand zwischen den vergebenen Bereichen (z.B. Subdatenpaketanfang, Subdatenpaketmitte, Subdatenpaketende oder eine (Teil-)Synchronisationssequenz) konstant ist. Zum Beispiel können drei Subdatenpakete eine Länge von jeweils 24 Symbolen aufweisen, wobei die Pausen 10 ms und 15 ms betragen. Wenn die Längen der Subdatenpakete bedingt durch eine Länge der Daten variabler Länge vergrößert werden und z.B. 34 Symbole pro Subdatenpaket ergeben, dann sind die Pausen kürzer, z.B. 5 ms und 10 ms.

Bei Ausführungsbeispielen kann der Daten$ender ausgebildet sein, um zumindest einen Teil der Subdatenpakete mit Synchronisationssequenzen zu versehen.

Bei Ausführungsbeispielen kann der Datensender ausgebildet sein, um zumindest einen Teil der Subdatenpakete mit Subsynchronisationssequenzen zu versehen. Dabei kann der Datensender ausgebildet sein, um eine Synchronisationssequenz in die Subsynchronisationssequenzen aufzuteilen.

Die Synchronisationssequenzen oder Subsynchronisationssequenzen können an beliebiger Stelle im Subdatenpaket liegen. Für eine mögliche folgende iterative Dekodierung ist es von Vorteil, dass die Synchronisationssequenzen oder Subsynchronisationssequenzen zusammen mit den Daten in einem Subdatenpaket gesendet werden. Natürlich ist es auch möglich, dass die Synchronisationssequenzen oder Subsynchronisationssequenzen und die Daten auf getrennte Subdatenpakete (Hops) zu verteilen. In diesem Fall ist es von Vorteil sicherzustellen, dass zwischen den Datenhops und Sync-Hops die Kohärenz nicht verloren geht.

Beispielsweise können die Subdatenpakete mit Synchronisationssequenzen oder Teilsynchronisationssequenzen versehen sein. Wenn die Subdatenpakete mit Synchronisationssequenzen versehen sind, dann ist empfängerseitig basierend auf der jeweiligen Synchronisationssequenz eine vollständige Synchronisation des jeweiligen Subdatenpakets bzw. Detektion oder Lokalisierung desselben in einem Empfangsdatenstrom möglich. Wenn die Subdatenpakete mit Teilsynchronisationssequenzen versehen sind, dann ist empfängerseitig eine vollständige Synchronisation der Subdatenpakete bzw. Detektion derselben in einem Empfangsdatenstrom (nur) über mehrere oder alle Teilsynchronisationssequenzen, in die die Synchronisationssequenz aufgeteilt ist, möglich.

Bei Ausführungsbeispielen kann der Datensender ausgebildet sein, um die Subdatenpakete mit einem von der Länge der Daten variabler Länge abhängigen zeitlichen Abstand auszusenden, so dass ein zeitlicher Abstand zwischen den Synchronisationssequenzen oder Subsynchronisationssequenzen der Subdatenpakete unabhängig von einer Länge der Daten variabler Länge konstant ist.

Beispielsweise können die Subdatenpakete immer so ausgesendet werden, dass ein zeitlicher Abstand zwischen den Synchronisationssequenzen oder Subsynchronisationssequenzen konstant ist.

Bei Ausführungsbeispielen können die Daten Kerndaten und Erweiterungsdaten umfassen, wobei die Kerndaten eine feste Länge aufweisen und die Erweiterungsdaten eine variable Länge aufweisen. Der Datensender kann ausgebildet sein, um die Kerndaten mit einer Signalisierungsinformation zur Signalisierung der Länge der Erweiterungsdaten zu versehen.

Der Datensender kann ausgebildet sein, um die Kerndaten und die Erweiterungsdaten auf die Subdatenpakete aufzuteilen.

Beispielsweise kann der Datensender ausgebildet sein, um die Kerndaten derart auf die Subdatenpakete aufzuteilen, dass in den Subdatenpaketen der jeweilige Teil der Kerndaten benachbart zu den (Sub-)Synchronisationssequenzen angeordnet ist. Der Datensender kann ausgebildet sein, um die Kerndaten derart auf die Subdatenpakete aufzuteilen, dass in den Subdatenpaketen der jeweilige Teil der Kerndaten gleichmäßig vor und nach den jeweiligen (Sub-)Synchronisationssequenzen angeordnet ist.

Beispielsweise kann der Datensender ausgebildet sein, um die Erweiterungsdaten derart auf die Subdatenpakete aufzuteilen, dass in den Subdatenpaketen der jeweilige Teil der Erweiterungsdaten benachbart zu dem jeweiligen Teil der Kerndaten angeordnet ist. Der Datensender kann ausgebildet sein, um die Erweiterungsdaten derart auf die Subdatenpakete aufzuteilen, dass in den Subdatenpaketen der jeweilige Teil der Erweiterungsdaten gleichmäßig vor und nach dem jeweiligen Teil der Kerndaten angeordnet ist.

Beispielsweise kann der Datensender ausgebildet sein, um die Kerndaten in Abhängigkeit von Längen der Synchronisationssequenzen oder Subsynchronisationssequenzen auf die Subdatenpakete aufzuteilen, so dass Subdatenpakete mit längeren Synchronisationssequenzen oder Subsynchronisationssequenzen einen größeren Teil an Kerndaten enthalten als Subdatenpakete mit kürzeren Synchronisationssequenzen oder Subsynchronisationssequenzen. Mit anderen Worten, die Kerndaten werden entsprechend der Länge der jeweiligen Präambellänge verteilt, d. h sind mehr Präambelsymbole in einem Subdatenpaket enthalten, können dort auch mehr Kerndatensymbole angebracht werden als in einem Subdatenpaket in dem weniger Präambelsymbole enthalten sind. Der Datensender kann ausgebildet sein, um die Erweiterungsdaten in Abhängigkeit von Längen der Synchronisationssequenzen oder Subsynchronisationssequenzen auf die Subdatenpakete aufzuteilen, so dass Subdatenpakete mit längeren Synchronisationssequenzen oder Subsynchronisationssequenzen einen größeren Teil an Erweiterungsdaten enthalten als Subdatenpakete mit kürzeren Synchronisationssequenzen oder Subsynchronisationssequenzen.

Bei Ausführungsbeispielen kann der Datensender ausgebildet sein, um die Anzahl von Subdatenpaketen in zumindest zwei unabhängige Blöcke von Subdatenpaketen aufzuteilen, wobei der Datensender ausgebildet ist, um die Subdatenpakete derart in die zumindest zwei Blöcke von Subdatenpaketen aufzuteilen, dass ein erster Block der zumindest zwei Blöcke von Subdatenpaketen für sich selbst empfängerseitig detektierbar ist.

Dabei kann der Datensender kann ausgebildet sein, um zumindest einen der zwei Blöcke von Subdatenpaketen mit einer Synchronisationssequenz zur Synchronisation der Subdatenpakete in einem Datenempfänger zu versehen. Ferner kann der Datensender ausgebildet sein, um den ersten Block von Subdatenpaketen mit einer Information über einen zweiten Block von Subdatenpaketen der zumindest zwei Blöcke von Subdatenpaketen zu versehen. Beispielsweise kann die Information zumindest eines aus einer Länge, einer Anzahl von Subdatenpaketen und ein Sprungmuster, mit der die Subdatenpakete gesendet werden, signalisieren. Beispielsweise kann die Lage der weiteren Blöcke bekannt sein oder im ersten Block signalisiert werden. Damit müssen die weiteren Blöcke nicht zwingend detektierbar sein.

Bei Ausführungsbeispielen kann der Datensender ausgebildet sein, um, falls eine Länge der Daten variabler Länge so groß ist, dass bei einer Aussendung der Subdatenpakete innerhalb des vorgegebenen Zeitintervalls ein Mindestwert der Sendepausen zwischen den Subdatenpaketen unterschritten werden würde, die Daten variabler Länge auf zumindest ein zusätzliches Subdatenpaket aufzuteilen. Dabei kann der Datensender ausgebildet sein, um die in den Subdatenpaketen fester Anzahl enthaltenen Daten mit einer Information über das zumindest eine zusätzliche Subdatenpaket zu versehen.

Im Folgenden werden bevorzugte Ausführungsbeispiele des Datenempfängers zum Empfangen von Daten variabler Länge beschrieben.

Bei Ausführungsbeispielen kann die vorgegebene Anzahl von Subdatenpaketen eine fest vorgegebene (oder nicht veränderliche) Anzahl von Subdatenpaketen sein. Die Daten variabler Länge können also (unabhängig von einer Länge derselben) immer auf die gleiche Anzahl von Subdatenpaketen aufgeteilt sein. Dementsprechend können die Längen der einzelnen Subdatenpakete von der Länge der Daten variabler Länge abhängig sein.

Bei Ausführungsbeispielen kann der Datenempfänger ausgebildet sein, um die Subdatenpakete innerhalb eines vorgegebenen Zeitintervalls zu empfangen.

Bei Ausführungsbeispielen können die Subdatenpakete zeitlich voneinander beabstandet sein, so dass zwischen den Subdatenpaketen Pausen vorhanden sind.

Bei Ausführungsbeispielen können die Sendepausen zwischen den Subdatenpaketen unabhängig von einer Länge der Daten variabler Länge konstant sein.

Beispielsweise können die Pausen (Sendepausen) zwischen den Subdatenpaketen konstant bleiben wenn sich die Längen der Subdatenpakete (Subpaketlängen) (in Abhängigkeit von der Länge der Daten variabler Länge) ändern. Zum Beispiel können drei Subdatenpakete eine Länge von jeweils 24 Symbolen aufweisen, wobei die Pausen 10 ms und 15 ms betragen. Wenn die Längen der Subdatenpakete bedingt durch eine Länge der Daten variabler Länge vergrößert werden und z.B. 34 Symbole pro Subdatenpaket ergeben, dann betragen die Pausen immer noch 10 ms und 15 ms.

Bei Ausführungsbeispielen können die Sendepausen zwischen den Subdatenpaketen von der Länge der Daten variabler Länge derart abhängig sind, dass ein zeitlicher Abstand zwischen vorgegebenen Bereichen (z.B. Subdatenpaketanfang, Subdatenpaketmitte, Subdatenpaketende oder eine (Teil-) Synchronisationssequenz) der Subdatenpakete unabhängig von einer Länge der Daten variabler Länge konstant ist.

Beispielsweise können die Subdatenpakete so ausgesendet werden, dass ein Abstand zwischen den vorgegebenen Bereichen (z.B. Subdatenpaketanfang, Subdatenpaketmitte, Subdatenpaketende oder eine (Teil-) Synchronisationssequenz) konstant ist. Zum Beispiel können drei Subdatenpakete eine Länge von jeweils 24 Symbolen aufweisen, wobei die Pausen 10 ms und 15 ms betragen. Wenn die Längen der Subdatenpakete bedingt durch eine Länge der Daten variabler Länge vergrößert werden und z.B. 34 Symbole pro Subdatenpaket ergeben, dann sind die Pausen kürzer, z.B. 5 ms und 10 ms.

Bei Ausführungsbeispielen kann zumindest ein Teil der Subdatenpakete mit Synchronisationssequenzen versehen sein, wobei der Datenempfänger ausgebildet sein kann, um die Subdatenpakete basierend auf den Synchronisationssequenzen zu detektieren.

Bei Ausführungsbeispielen kann zumindest ein Teil der Subdatenpakete mit Subsynchronisationssequenzen versehen sein, wobei der Datenempfänger ausgebildet sein kann, um die Subdatenpakete basierend auf den Subsynchronisationssequenzen zu detektieren.

Beispielsweise können die Subdatenpakete mit Synchronisationssequenzen oder Teilsynchronisationssequenzen versehen sein. Wenn die Subdatenpakete mit Synchronisationssequenzen versehen sind, dann ist empfängerseitig basierend auf der jeweiligen Synchronisationssequenz eine vollständige Synchronisation des jeweiligen Subdatenpakets bzw. Detektion desselben in einem Empfangsdatenstrom möglich. Wenn die Subdatenpakete mit Teilsynchronisationssequenzen versehen sind, dann ist empfängerseitig eine vollständige Synchronisation der Subdatenpakete bzw. Detektion oder Lokalisierung derselben in einem Empfangsdatenstrom (nur) über mehrere oder alle Teilsynchronisationssequenzen, in die die Synchronisationssequenz aufgeteilt ist, möglich.

Bei Ausführungsbeispielen kann der zeitliche Abstand zwischen den Synchronisationssequenzen oder Subsynchronisationssequenzen unabhängig von einer Länge der Daten variabler Länge konstant sein und/oder dem Datenempfänger bekannt sein.

Bei Ausführungsbeispielen können die Daten variabler Länge Kerndaten und Erweiterungsdaten umfassen, wobei die Kerndaten eine feste Länge aufweisen und die Erweiterungsdaten eine variable Länge aufweisen.

Die Kerndaten können mit einer Signalisierungsinformation zur Signalisierung der Länge der Erweiterungsdaten versehen sein, wobei der Datenempfänger ausgebildet sein kann, um die Erweiterungsdaten unter Verwendung der Signalisierungsinformation zu empfangen oder aus den Subdatenpaketen zu extrahieren.

Die Kerndaten und die Erweiterungsdaten können auf die Subdatenpakete aufgeteilt sein.

Beispielsweise können die Kerndaten derart auf die Subdatenpakete aufgeteilt sein, dass in den Subdatenpaketen der jeweilige Teil der Kerndaten benachbart zu den Subsynchronisationssequenzen angeordnet ist. Zum Beispiel können die Kerndaten derart auf die Subdatenpakete aufgeteilt sein, dass in den Subdatenpaketen der jeweilige Teil der Kerndaten gleichmäßig vor und nach der jeweiligen Synchronisationssequenz oder Subsynchronisationssequenz angeordnet ist.

Beispielsweise können die Erweiterungsdaten derart auf die Subdatenpakete aufgeteilt sein, dass in den Subdatenpaketen der jeweilige Teil der Erweiterungsdaten benachbart zu dem jeweiligen Teil der Kerndaten angeordnet ist. Zum Beispiel können die Erweiterungsdaten derart auf die Subdatenpakete aufgeteilt sein, dass in den Subdatenpaketen der jeweilige Teil der Erweiterungsdaten gleichmäßig vor und nach dem jeweiligen Teil der Kerndaten angeordnet ist.

Die Kerndaten können in Abhängigkeit von Längen der Synchronisationssequenz oder Subsynchronisationssequenz auf die Subdatenpakete aufgeteilt sind, so dass Subdatenpakete mit längeren Synchronisationssequenz oder Subsynchronisationssequenz einen größeren Teil an Kerndaten enthalten als Subdatenpakete mit kürzeren Synchronisationssequenz oder Subsynchronisationssequenz. Dabei kann der Datenempfänger ausgebildet sein, um Längen der Teile an Kerndaten, die in den jeweiligen Subdatenpaketen enthalten sind, basierend auf den Längen der Synchronisationssequenz oder Subsynchronisationssequenz zu ermitteln, die in den jeweiligen Subdatenpaketen enthalten sind.

Die Erweiterungsdaten können in Abhängigkeit von Längen der Synchronisationssequenz oder Subsynchronisationssequenz auf die Subdatenpakete aufgeteilt sind, so dass Subdatenpakete mit längeren Synchronisationssequenz oder Subsynchronisationssequenz einen größeren Teil an Erweiterungsdaten enthalten als Subdatenpakete mit kürzeren Synchronisationssequenz oder Subsynchronisationssequenz. Dabei kann der Datenempfänger ausgebildet sein, um Längen der Teile an Erweiterungsdaten, die in den jeweiligen Subdatenpaketen enthalten sind, basierend auf den Längen der (Sub- )Synchronisationssequenz zu ermitteln, die in den jeweiligen Subdatenpaketen enthalten sind.

Bei Ausführungsbeispielen kann der Datenempfänger ausgebildet sein, um einen ersten Bereich des jeweiligen Teils der Daten variabler Länge unter Verwendung der Synchronisationssequenz oder Subsynchronisationssequenz zu decodieren und zu reencodieren, um einen ersten Teilbereich von reencodierten Daten zu erhalten; um einen zweiten Bereich des jeweiligen Teils der Daten variabler Länge unter Verwendung des ersten Teilbereichs von reencodierten Daten zu decodieren, um einen zweiten Teilbereich von reencodierten Daten zu erhalten; und um einen dritten Bereich des jeweiligen Teils der Daten variabler Länge unter Verwendung des zweiten Teilbereich von reencodierte Daten zu decodieren.

Dabei kann in den jeweiligen Subdatenpaketen der erste Bereich unmittelbar benachbart zu der Synchronisationssequenz oder Subsynchronisationssequenz angeordnet sein, und wobei der zweite Bereich unmittelbar benachbart zu dem ersten Bereich angeordnet sein kann.

Bei Ausführungsbeispielen kann die Anzahl von Subdatenpaketen in zumindest zwei unabhängige Blöcke von Subdatenpaketen aufgeteilt sein, so dass ein erster Block der zumindest zwei Blöcke von Subdatenpaketen für sich selbst detektierbar ist. Der Datenempfänger kann dabei ausgebildet sein, um den ersten Block der zumindest zwei Blöcke von Subdatenpaketen für sich selbst zu detektieren.

Zumindest einer der zumindest zwei Blöcke von Subdatenpaketen (z.B. der erste Block der zumindest zwei Blöcke) kann mit einer Synchronisationssequenz zur Synchronisation der Subdatenpakete in einem Datenempfänger versehen ist. Der Datenempfänger kann dabei ausgebildet sein, um den zumindest einen der zumindest zwei Blöcke von Subdatenpaketen unter Verwendung der jeweiligen Synchrönisationssequenz zu detektieren.

Der erste Block von Subdatenpaketen der zumindest zwei Blöcke von Subdatenpaketen kann mit einer Information über einen zweiten Block der zumindest zwei Blöcke von Subdatenpaketen versehen sein. Der Datenempfänger kann dabei ausgebildet sein, um den zweiten Block der zumindest zwei Blöcke von Subdatenpaketen unter Verwendung der Information zu empfangen. Beispielsweise kann die Information zumindest eines aus einer Länge, einer Anzahl von Subdatenpaketen und ein Sprungmuster, mit der die Subdatenpakete gesendet werden, umfassen.

Bei Ausführungsbeispielen kann der Datenempfänger ausgebildet sein, um zumindest ein weiteres Subdatenpaket zu empfangen, dass der Anzahl von Subdatenpaketen angehängt ist.

Bei Ausführungsbeispielen können die in den Subdatenpaketen fester Anzahl enthaltenen Daten mit einer Information über das zumindest eine zusätzliche Subdatenpaket versehen sein, wobei der Datenempfänger ausgebildet sein kann, um das zumindest eine zusätzliche Subdatenpaket unter Verwendung der Information zu empfangen.

Ausführungsbeispiele der vorliegenden Erfindung werden bezugnehmend auf die beiliegenden Figuren näher erläutert. Es zeigen:
- Fig. 1: ein schematisches Blockschaltbild eines Systems mit einem Datensender und einem Datenempfänger, gemäß einem Ausführungsbeispiel der vorliegenden Erfindung;
- Fig. 2: in einem Diagramm eine Belegung eines Übertragungskanals bei der Übertragung der Daten variabler Länge unter Verwendung einer fest vorgegebenen Anzahl an Subdatenpaketen innerhalb eines fest vorgegeben Zeitintervalls;
- Fig. 3: in einem Diagramm eine Belegung eines Übertragungskanals bei der Übertragung von Daten unter Verwendung einer Mehrzahl von Subdatenpaketen mit Sendepausen, die die zeitlichen Abstände zwischen den Subdatenpaketen vorgeben;
- Fig. 4: in einem Diagramm eine Belegung eines Übertragungskanals bei der Übertragung der Daten variabler Länge unter Verwendung einer fest vorgegebenen Anzahl an Subdatenpaketen innerhalb eines fest vorgegebenen Zeitintervalls, wobei Abstände zwischen den Synchronisationssequenzen bzw. Teilsynchronisationssequenzen konstant sind;
- Fig. 5: eine schematische Ansicht eines Aufbaus der Subdatenpakete mit jeweils einer Synchronisationssequenz, einer Kernsequenz und einer Erweiterungssequenz;
- Fig. 6: eine schematische Ansicht eines Aufbaus der Subdatenpakete mit jeweils einer Synchronisationssequenz, einer Kernsequenz und einer Erweiterungssequenz zusammen mit einer decoderseitigen Aufteilung des jeweiligen Subdatenpakets entsprechend der Sequenzen für eine iterative Decodierung;
- Fig. 7: eine schematische Ansicht eines Aufbaus der Subdatenpakete mit jeweils einer Synchronisationssequenz, einer Kernsequenz und einer Erweiterungssequenz, wobei die Daten entsprechend der Kernsequenz und der Erweiterungssequenz in den jeweiligen Subdatenpaketen so angeordnet sind, dass ein Abstand der codierten Daten in Bezug auf eine Einflusslänge eines für die Codierung der Daten verwendeten Codes erhöht ist;
- Fig. 8: in einem Diagramm eine Belegung eines Übertragungskanals bei der Übertragung von Daten unter Verwendung einer Mehrzahl von Subdatenpaketen, die in Blöcken zusammengefasst sind;
- Fig. 9: in einem Diagramm eine Belegung eines Übertragungskanals bei der Übertragung der Daten variabler Länge unter Verwendung einer vorgegebenen Anzahl an Subdatenpaketen, wobei der vorgegebenen Anzahl an Subdatenpaketen zusätzliche Subdatenpakete angehängt sind;
- Fig. 10: ein Flussdiagramm eines Verfahrens zum Senden von Daten variabler Länge, gemäß einem Ausführungsbeispiel; und
- Fig. 11: ein Flussdiagramm eines Verfahrens zum Empfangen von Daten variabler Länge, gemäß einem Ausführungsbeispiel.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibungen in den unterschiedlichen Ausführungsbeispielen untereinander austauschbar ist.

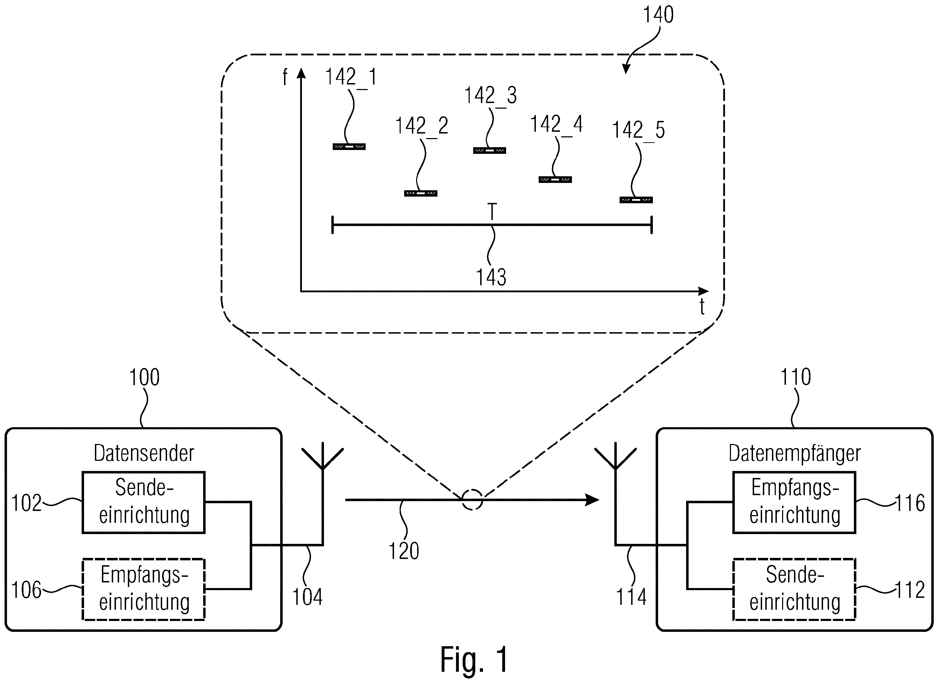

Fig. 1 zeigt ein System mit einem Datensender 100 und einem Datenempfänger 110, gemäß einem Ausführungsbeispiel der vorliegenden Erfindung.

Der Datensender 100 ist ausgebildet, um Daten 120 variabler Länge auf eine vorgegebene Anzahl von Subdatenpaketen 142_1 bis 142_n aufzuteilen und um die vorgegebene Anzahl von Subdatenpaketen 142_1 bis 142_n auszusenden.

Der Datenempfänger 110 ist ausgebildet, um die vorgegebene Anzahl von Subdatenpaketen 142_1 bis 142_n zu empfangen, auf die die Daten 120 variabler Länge aufgeteilt sind. Der Datenempfänger 110 kann ferner ausgebildet sein, um die empfangenen Subdatenpakete 142_1 bis 142_n oder in Abhängigkeit von einer verwendeten Kanalcodierung zumindest ein Teil der empfangenen Subdatenpakete 142_1 bis 142_n zu kombinieren, um die Daten 120 variabler Länge zu erhalten.

Bei Ausführungsbeispielen kann die vorgegebene Anzahl von Subdatenpaketen 142_1 bis 142_n eine fest vorgegebene (oder nicht veränderliche) Anzahl von Subdatenpaketen sein, d.h. wobei n eine natürliche Zahl größer gleich zwei ist, wobei n nicht veränderlich ist. Der Datensender kann demnach ausgebildet sein, um die Daten variabler Länge (unabhängig von einer Länge derselben) immer auf die gleiche Anzahl n von Subdatenpaketen 142_1 bis 142_n aufzuteilen. Dementsprechend können die Längen der einzelnen Subdatenpakete 142_1 bis 142_n von der Länge der Daten 120 variabler Länge abhängig sein.

Wie in Fig. 1 beispielhaft zu erkennen ist, können die Daten 120 variabler Länge unabhängige von einer Länge derselben auf n=5 Subdatenpakete 142_1 bis 142_5 aufgeteilt werden.

Bei Ausführungsbeispielen können die Subdatenpakete 142_1 bis 142_n innerhalb eines fest vorgegebenen (oder nicht veränderlichen) Zeitintervalls 143 übertragen werden. Ferner können die Subdatenpakete 142_1 bis 142_n mit einem zeitlichen Abstand übertragen werden, so dass zwischen den Subdatenpaketen 142_1 bis 142_n Sendepausen vorhanden sind. Da die Längen der einzelnen Subdatenpakete 142_1 bis 142_n von der Länge der Daten 120 variabler Länge abhängig sind, und die Daten innerhalb des fest vorgegebenen Zeitintervalls 143 übertragen werden, sind auch die Sendepausen zwischen den Subdatenpaketen 142_1 bis 142_n von der Länge der Daten 120 variabler Länge abhängig.

Bei Ausführungsbeispielen können die Subdatenpakete unter Verwendung eines Zeitsprungmusters und/oder Frequenzsprungmusters 140 übertragen werden.

Bei Ausführungsbeispielen kann das Frequenzsprungmuster 140 eine Abfolge von Sendefrequenzen oder Sendefrequenzsprüngen angeben, mit denen die Subdatenpakete 142_1 bis 142_n zu senden sind.

Beispielsweise kann ein erstes Subdatenpaket 142_1 mit einer ersten Sendefrequenz (oder in einem ersten Frequenzkanal) und ein zweites Subdatenpaket 142_2 mit einer zweiten Sendefrequenz (oder in einem zweiten Frequenzkanal) gesendet werden, wobei die erste Sendefrequenz und die zweite Sendefrequenz unterschiedlich sind. Das Frequenzsprungmuster kann dabei die erste Sendefrequenz und die zweite Sendefrequenz definieren (oder vorgeben, oder angeben). Alternativ kann das Frequenzsprungmuster die erste Sendefrequenz und einen Frequenzabstand (Sendefrequenzsprung) zwischen der ersten Sendefrequenz und der zweiten Sendefrequenz angeben. Natürlich kann das Frequenzsprungmuster auch nur den Frequenzabstand (Sendefrequenzsprung) zwischen der ersten Sendefrequenz und der zweiten Sendefrequenz angeben.

Bei Ausführungsbeispielen kann das Zeitsprungmuster eine Abfolge von Sendezeitpunkten oder Sendezeitabständen angeben, mit denen die Subdatenpakete 142_1 bis 142_n zu senden sind.

Beispielsweise kann ein erstes Subdatenpaket 142_1 zu einem ersten Sendezeitpunkt (oder in einem ersten Sendezeitschlitz) und ein zweites Subdatenpaket 142_2 zu einem zweiten Sendezeitpunkt (oder in einem zweiten Sendezeitschlitz) gesendet werden, wobei der erste Sendezeitpunkt und der zweite Sendezeitpunkt unterschiedlich sind. Das Zeitsprungmuster kann dabei den ersten Sendezeitpunkt und den zweiten Sendezeitpunkt definieren (oder vorgeben, oder angeben). Alternativ kann das Zeitsprungmuster den ersten Sendezeitpunkt und einen zeitlichen Abstand zwischen dem ersten Sendezeitpunkt und dem zweiten Sendezeitpunkt angeben. Natürlich kann das Zeitsprungmuster auch nur den zeitlichen Abstand zwischen dem ersten Zeitpunkt und dem zweiten Sendezeitpunkt angeben.

Ein Zeit- und Frequenzsprungmuster 140 kann die Kombination aus einem Frequenzsprungmuster und einem Zeitsprungmuster sein, d.h. eine Abfolge von Sendezeitpunkten oder Sendezeitabständen mit denen die Subdatenpakete 142_1 bis 142_n übertragen werden, wobei den Sendezeitpunkten (oder Sendezeitabständen) Sendefrequenzen (oder Sendefrequenzsprünge) zugeordnet sind.

Mit anderen Worten, der Datensender 100 kann ausgebildet sein, um die Daten 120 variabler Länge unter Verwendung des Telegramm Splitting Verfahrens auszusenden. Dabei können die Daten variabler Länge 120 ein Telegramm sein, wobei der Datensender 100 ausgebildet ist, um das Telegramm in die fest vorgegebene Anzahl von Subdatenpakten 142_1 bis 142_n (oder Datensubpakete oder Teildatenpakete) aufzuteilen, wobei jedes der Mehrzahl von Subdatenpaketen kürzer ist als das Telegramm. Die Mehrzahl von Subdatenpaketen können dabei unter Verwendung des Frequenzsprungmusters und/oder Zeitsprungmusters ausgesendet werden. Beispielsweise ist jedem der Mehrzahl von Subdatenpaketen durch das Frequenzsprungmuster und/oder Zeitsprungmuster eine Sendefrequenz (oder ein Sendefrequenzsprung bezogen auf ein vorheriges Datenpaket) und/oder ein Sendezeitpunkt (oder Sendezeitintervall, oder Sendezeitschlitz, Sendezeitsprung bezogen auf ein vorheriges Subdatenpaket) zugeordnet. Ferner können die Mehrzahl von Subdatenpaketen 142_1 bis 142_n mit einem zeitlichen Abstand ausgesendet werden, so dass zwischen den Subdatenpaketen 142_1 bis 142_n Sendepausen vorhanden sind.

Bei Ausführungsbeispielen kann der Datensender 100 eine Sendeeinrichtung (Transmitter) 102 aufweisen, die ausgebildet ist, um die Daten 120 zu senden. Die Sendeeinrichtung 102 kann mit einer Antenne 104 des Datensenders 100 verbunden sein. Der Datensender 100 kann ferner eine Empfangseinrichtung (Receiver) 106 aufweisen, die ausgebildet ist, um Daten zu empfangen. Die Empfangseinrichtung kann mit der Antenne 104 oder einer weiteren (separaten) Antenne des Datensenders 100 verbunden sein. Der Datensender 100 kann auch eine kombinierte Sendeempfangseinrichtung (Transceiver) aufweisen.

Der Datenempfänger 110 kann eine Empfangseinrichtung (Receiver) 116 aufweisen, die ausgebildet ist, um die Daten 120 zu empfangen. Die Empfangseinrichtung 116 kann mit einer Antenne 114 des Datenempfängers 110 verbunden sein. Ferner kann der Datenempfänger 110 eine Sendeeinrichtung (Transmitter) 112 aufweisen, die ausgebildet ist, um Daten zu senden. Die Sendeeinrichtung 112 kann mit der Antenne 114 oder einer weiteren (separaten) Antenne des Datenempfängers 110 verbunden sein. Der Datenempfänger 110 kann auch eine kombinierte Sendeempfangseinrichtung (Transceiver) aufweisen.

Bei Ausführungsbeispielen kann der Datensender 100 ein Sensorknoten sein, während der Datenempfänger 110 eine Basisstation sein kann. Natürlich ist es auch möglich, dass der Datensender 100 eine Basisstation ist, während der Datenempfänger 110 ein Sensorknoten ist. Ferner ist es möglich, dass sowohl der Datensender 100 als auch der Datenempfänger 110 Sensorknoten sind. Des Weiteren ist es möglich, dass sowohl der Datensender 100 als auch der Datenempfänger 110 Basisstationen sind.

Im Folgenden werden detaillierte Ausführungsbeispiele des anhand von Fig. 1 vorgestellten Übertragungsverfahrens, das durch den Datensender 100 und den Datenempfänger 110 durchgeführt werden kann, näher erläutert.

Ausführungsbeispiele ermöglichen eine Übertragung unterschiedlich langer Datenpakte mit einem Telemetriesystem.

Anstelle die Hop-Anzahl (Anzahl an Subdatenpaketen) an die Datenmenge anzupassen wird bei Ausführungsbeispielen die Länge der Hops (Länge der Subdatenpakete) an die Datenmenge angepasst.

Eine Anpassung der Hop-Anzahl an die Datenmenge hat den Nachteil, dass eine zusätzliche Signalisierungsinformation (z. B. in Form von Präambeln) in der Erweiterungssequenz eingefügt werden muss. Dies erhöht die Übertragungsdauer des Telegramms im Kanal und bietet somit eine höhere Störanfälligkeit. Weiterhin wird bei zusätzlichen Hops zusätzlich eine Präambel benötigt. Ein weiterer Nachteil entsteht durch die variable Anzahl an Teilpaketen. Werden Teilpakete an das Telegramm angefügt, erhöht sich die Übertragungsdauer und somit auch die Latenz bei der Übertragung. Dies ist vor allem bei zeitkritischen Anwendungen ein Problem.

Im Gegensatz dazu wird bei Ausführungsbeispielen das Telegram Splitting Verfahren verwendet und die Längen der Teilpakete (Subdatenpakete) 142_1 bis 142_n variiert ohne eine Überlappung der Teilpakete 142_1 bis 142_n zu erhalten. Würden die Längen der Teilpakete bei klassischen Systemen mit Frequency Hopping variiert käme es zu einer zeitlichen Überlagerung der einzelnen Teilpakete.

### Erstes detailliertes Ausführungsbeispiel

Die Daten 120 eines Telegramms können auf mehrere Hops (Subdatenpakete) 142_1 bis 142_n aufgeteilt übertragen werden (siehe auch DE 10 2011 082 098 B4). Bei traditionellen Hopping Systemen werden die Teilpakete direkt aneinander übertragen, beim Telegramm Splitting Verfahren ist jedoch noch Platz für weitere Daten vor und nach den jeweiligen Teilpaketen 142_1 bis 142_n.

Anstelle die Anzahl der Teilpakete zu variieren wird bei Ausführungsbeispielen die Länge der Teilpakete 142_1 bis 142_n variiert. Dies bedeutet, liegen wenige Daten 120 vor, ist die Anzahl der Symbole (auch als Länge bezeichnet) in den Teilpaketen 142_1 bis 142_n geringer als wenn mehr Daten vorliegen.

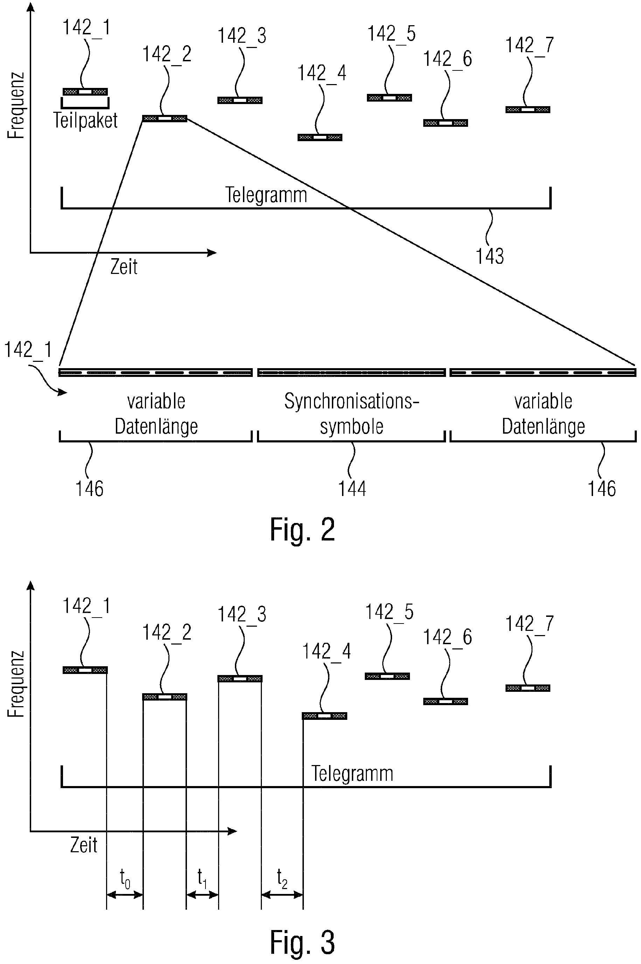

Fig. 2 zeigt in einem Diagramm eine Belegung eines Übertragungskanals bei der Übertragung der Daten 120 variabler Länge unter Verwendung einer fest vorgegebenen Anzahl an Subdatenpaketen 142_1 bis 142 _7 innerhalb eines fest vorgegeben Zeitintervalls 143. Dabei beschreibt die Ordinate die Frequenz und die Abszisse die Zeit.

Wie in Fig. 2 zu erkennen ist, können die Daten 120 variabler Länge (unabhängig von einer Länge derselben) immer auf n = 7 Subdatenpakete 142_1 bis 142_7 aufgeteilt werden. Die Subdatenpakete 142_1 bis 142_7 werden dabei innerhalb des fest vorgegeben Zeitintervalls 143 sowohl in der Zeit als auch in der Frequenz verteilt (d.h. unter Verwendung eines Zeitund Frequenzsprungmusters) übertragen, so dass Sendepausen zwischen den Subdatenpakete 142_1 bis 142_7 vorhanden sind.

Die Subdatenpakete 142_1 bis 142_7 können mit Synchronisationssequenzen oder Teilsynchronisationssequenzen versehen sein. Wenn die Subdatenpakete 142_1 bis 142_7 mit Synchronisationssequenzen versehen sind, dann ist empfängerseitig basierend auf der jeweiligen Synchronisationssequenz eine vollständige Synchronisation des jeweiligen Subdatenpakets bzw. Detektion oder Lokalisierung desselben in einem Empfangsdatenstrom möglich. Wenn die Subdatenpakete 142_1 bis 142_7 mit Teilsynchronisationssequenzen versehen sind, dann ist empfängerseitig eine vollständige Synchronisation der Subdatenpakete bzw. Detektion derselben in einem Empfangsdatenstrom (nur) über mehrere oder alle Teilsynchronisationssequenzen, in die die Synchronisationssequenz aufgeteilt ist, möglich.

Mit anderen Worten, Fig. 2 zeigt einen Aufbau eines Telegramms mit variablen Teilpaketlängen. Dort wird für die Synchronisation eine Midambel (eine in der Mitte des Subdatenpakets angeordnete Synchronisationssequenz oder Teilsynchronisationssequenz) 144 eingesetzt und die Daten 146 rechts (oder davor) und links (oder danach) davon angebracht. Die Länge der Datenblöcke variiert entsprechend der Anzahl an zu übertragenden Daten.

Anstelle einer Midambel kann die Synchronisationsfolge an beliebiger Stelle im Teilpaket 142_1 bis 142_n eingefügt und sogar auf mehrere Sequenzen gesplittet werden.

In aktuellen Systemen sind die Abstände zwischen den Teilpaketen durch die Pausen (keine Übertragung) zwischen den Teilpaketen bestimmt. Dieses Schema ist in Fig. 3 zu erkennen. Im Detail zeigt Fig. 3 in einem Diagramm eine Belegung eines Übertragungskanals bei der Übertragung von Daten unter Verwendung einer Mehrzahl von Subdatenpaketen 142_1 bis 142 _7 mit Sendepausen, die die zeitlichen Abstände t₀, t₁ und t₂ zwischen den Subdatenpaketen 142_1 bis 142 _7 vorgeben. Dabei beschreibt die Ordinate die Frequenz und die Abszisse die Zeit. Mit anderen Worten, Fig. 3 zeigt eine Definition des Sprungmusters durch die Pausen zwischen den Teilpaketen 142_1 bis 142 _7. Es zeigt sich, dass die Abstände zwischen den Teilpaketen 142_1 bis 142 _7 durch das Ende des vorherigen zum Beginn des nächsten Teilpakets definiert ist. Sind diese Pausen nun für verschiedene Längen konstant, ändern sich die Abstände der Synchronisationssequenzen zueinander. Damit der Empfänger die Daten korrekt detektieren kann benötigt er vorab die Information welche Länge die Teilpakete 142_1 bis 142 _7 besitzen oder es werden alle Möglichkeiten im Empfänger probiert, bis die korrekte Länge bzw. der Abstand zwischen den Synchronisationssequenzen gefunden ist.

Bei Ausführungsbeispielen kann (senderseitig bzw. wellenformseitig) die Anzahl n der Teilpakete 142_1 bis 142_n für mehrere Längen von zu übertragenden Daten gleich sein. Die Länge der Teilpakete 142_1 bis 142_n ändert sich mit der zu übertragenden Datenmenge.

Bei Ausführungsbeispielen kann (empfängerseitig bzw. decoderseitig) die Anzahl der empfangenen Symbole im Decoder entsprechend der Telegrammlänge variieren. Ist diese unbekannt, kann der Decoder alle möglichen Längen auf deren Wahrscheinlichkeit, dass diese übertragen wurde, untersuchen.

### Zweites detailliertes Ausführungsbeispiel

Im vorherigen detaillierten Ausführungsbeispiel es ist es möglich, die Pausen zwischen den Teilpaketen konstant zu halten (siehe hierzu Fig. 3). Dies bedeutet, dass die Pausen unabhängig von den Teilpaketlängen festgelegt werden, da laut Definition das Ende des vorherigen zum Beginn des nächsten Teilpakets festgelegt wurde. Dies kann jedoch den Nachteil haben, dass die Abstände zwischen den Synchronisationssequenzen für verschiedene Telegrammlängen nicht mehr konstant sind, wodurch mehrere Detektionen für die verschiedenen Abstände durchgeführt werden müssen.

Werden die Abstände zwischen den Synchronisationssequenzen über die verschiedenen Telegrammlängen konstant gehalten, ist es möglich alle Längen mit nur einer einzigen Synchronisation durchzuführen. Somit verkürzen sich die Pausen zwischen den Teilpaketen entsprechend wenn die Länge der Nutzdaten pro Telegramm steigt.

Dies bietet den Vorteil, dass bereits vorhandene Empfänger weiterhin die gleichen Detektionsalgorithmen einsetzen können und nur der Decoder auf die variablen Telegrammlängen angepasst werden muss.

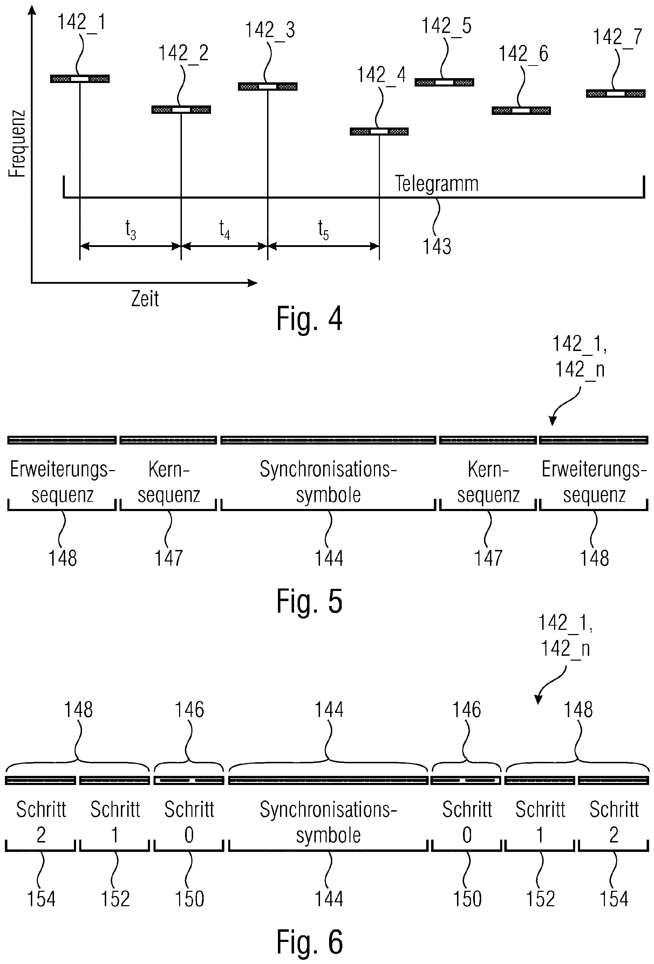

Fig. 4 zeigt in einem Diagramm eine Belegung eines Übertragungskanals bei der Übertragung der Daten 120 variabler Länge unter Verwendung einer fest vorgegebenen Anzahl an Subdatenpaketen 142_1 bis 142 _7 innerhalb eines fest vorgegebenen Zeitintervalls 143, wobei Abstände t₃, t₄ und t₅ zwischen den Synchronisationssequenzen bzw. Teilsynchronisationssequenzen konstant sind. Dabei beschreibt die Ordinate die Frequenz und die Abszisse die Zeit.

Mit anderen Worten, Fig. 4 zeigt eine Definition des Sprungmusters durch die Abstände der Synchronisationssequenzen zwischen den Teilpaketen.

Bei Ausführungsbeispielen kann (senderseitig bzw. wellenformseitig) die Anzahl n der Teilpakete 142_1 bis 142_n ist für verschiedene Längen von zu übertragenden Daten gleich sein. Die Pausen zwischen den Teilpaketen kann sich dabei mit der Telegrammlänge ändern, wobei die Abstände der Synchronisationssequenzen (der Teilpakete 142_1 bis 142_n) gleich bleiben.

Bei Ausführungsbeispielen kann (empfängerseitig bzw. decoderseitig) die Synchronisation für alle Telegrammlängen gemeinsam erfolgen. Es ist für die Detektion keine Kenntnis der übertragenen Telegrammlänge notwendig.

### Drittes detailliertes Ausführungsbeispiel

Bei Ausführungsbeispielen kann das Telegramm in eine Kernsequenz (engl. core sequence) und eine Erweiterungssequenz (engl. extension sequence) unterteilt werden. Hierbei stellt die Kernsequenz die minimale Länge des Telegramms dar, welche somit immer übertragen werden muss.

Durch die Unterteilung des Telegramms in eine Kernsequenz und eine Erweiterungssequenz, ist es für den Empfänger möglich bereits vorab einen Teil der Information zu dekodieren, bevor das komplette Telegramm übertragen wurde.

Fig. 5 zeigt eine schematische Ansicht eines Aufbaus der Subdatenpakete 142_1 bis 142_n mit jeweils einer Synchronisationssequenz, einer Kernsequenz und einer Erweiterungssequenz. Wie in Fig. 5 zu erkennen ist, kann in den jeweiligen Subdatenpaketen 142_1 bis 142_n die Kernsequenz 147 (unmittelbar) benachbart zu der Synchronisationssequenz 144 angeordnet sein. Ferner kann in den jeweiligen Subdatenpaketen 142_1 bis 142_n die Erweiterungssequenz 148 (unmittelbar) benachbart zu der Kernsequenz 147 angeordnet sein. Beispielsweise kann ein erster Teil der Kernsequenz vor der Synchronisationssequenz angeordnet sein, während ein zweiter Teil der Kernsequenz nach der Synchronisationssequenz angeordnet sein kann. Der erste Teil der Kernsequenz und der zweite Teil der Kernsequenz können gleich lang sein. Ein erster Teil der Erweiterungssequenz kann vor dem ersten Teil der Kernsequenz angeordnet sein, während ein zweiter Teil der Erweiterungssequenz nach dem zweiten Teil der Kernsequenz angeordnet sein kann. Der erste Teil der Erweiterungssequenz und der zweite Teil der Erweiterungssequenz können gleich lang sein. Die Synchronisationssequenz kann in der Mitte des jeweiligen Subdatenpakets 142_1 bis 142_n angeordnet sein.

Mit anderen Worten, Fig. 5 zeigt einen Aufbau eines Subpakets (oder Teilpakets) 142_1 bis 142_n mit Kernsequenz und Erweiterungssequenz. Es ist zu erkennen, dass die Symbole des Kerns am nächsten zu den Synchronisationssymbolen angeordnet sind. Hierdurch ist es möglich, den Kern unabhängig von der Erweiterung zu decodieren, es ist somit keine Kenntnis über die Länge der Erweiterung nötig.

Dies bietet ebenfalls den großen Vorteil, dass die Größe des Kerns auf eine bereits vorhandene Länge eines bestehenden Systems gesetzt werden kann. Somit kann die Synchronisation und die Dekodierung des bestehenden Systems weiterverwendet werden und es muss nur ein weiterer Decoder für die Erweiterung hinzugefügt werden.

Bei Ausführungsbeispielen kann (senderseitig bzw. wellenformseitig) ein Telegramm in einen Kern und eine Erweiterung unterteilt sein. Im Gegensatz zur DE 10 2011 082 098 B4 wird dies jedoch mit konstanter Anzahl an Teilpaketen durch die Variation deren Längen durchgeführt.

Bei Ausführungsbeispielen kann (empfängerseitig bzw. decoderseitig) nach der Detektion die Decodierung in zwei getrennten Schritten erfolgen. Beispielsweise kann zur Decodierung der Kernsequenz die Synchronisationssequenz verwendet werden, während zur Decodierung der Erweiterungssequenz eine reencodierte Kernsequenz verwendet werden kann.

### Viertes detailliertes Ausführungsbeispiel

Durch die Unterteilung des Telegramms in einen Kern und die Erweiterung ergibt sich die Möglichkeit der getrennten Dekodierung des Kerns von der Erweiterung. Somit lässt sich beispielsweise die Länge des gesamten Telegramms nicht mehr vorab, sondern direkt im Kern des übertragenen Telegramms signalisieren.

Hierbei wird im Sender die notwendige Information zur Rückgewinnung der Längeninformation gezielt in den Kern eingebracht. Der Empfänger dekodiert zunächst den Kern und kann daraus auf die Länge des gesamten Telegramms schließen. Ist diese Länge bekannt, können die entsprechend notwendigen Daten beispielsweise aus einem Puffer geladen werden und die Dekodierung der Erweiterung kann erfolgen.

Wird eine Fehlerkorrektur (z.B. FEC (FEC = Forward Error Correction, dt. Vorwärtsfehlerkorrektur) für die Übertragung von Symbolen eingesetzt kann diese entweder in zwei voneinander unabhängige Teile zerlegt werden oder es wird eine gesamte Codierung des Telegramms durchgeführt. Im zweiten Fall muss jedoch die Möglichkeit der vorzeitigen Teildekodierung der Längeninformation bestehen.

Ist dem Empfänger die Telegrammlänge bereits vorab bekannt oder diese wird durch das Probieren aller Möglichkeiten erreicht, können im Kern auch beliebige Nutzdaten eingebracht werden. Ebenfalls möglich ist eine Kombination aus Längeninformation und weiteren Daten.

Die Länge der Kernsymbole kann beliebig groß gewählt werden, sie sollte jedoch nicht wesentlich größer als die minimal zu erwartende Telegrammlänge gewählt werden, um die Übertragung von nicht notwendigen Zusatzdaten zu vermeiden. Das ist nötig, falls weniger Daten vorliegen, als für den Kern benötigt werden.

Zusätzlich zur Signalisierung der Längeninformation können auch weitere Parameter im Kern eingefügt werden, die der Empfänger für die Dekodierung nutzen kann.

Bei Ausführungsbeispielen kann (senderseitig bzw. wellenformseitig) eine Längeninformation und/oder weiterer Signalisierungsinformationen in den Kern eingebracht werden.

Bei Ausführungsbeispielen kann (empfängerseitig bzw. decoderseitig) nach der Detektion die Decodierung in zwei getrennten Schritten, wobei für die Dekodierung der Erweiterung ein Teil der gewonnenen Information aus dem Kern verwendet wird.

### Fünftes detailliertes Ausführungsbeispiel

Wie bereits in den vorherigen detaillierten Ausführungsbeispielen gezeigt, können die Daten ausgehend von der Synchronisationssequenz 144 nach außen hin angefügt werden. Je mehr Daten vorhanden sind, desto länger werden entsprechend die Längen der Teilpakete (Subdatenpakete) 142_1 bis 142_n. Hierdurch kann sich der Nachteil ergeben, dass durch Schätzfehler die Fehlerwahrscheinlichkeit der Symbole mit ansteigender Entfernung von der Synchronisationssequenz 144 linear ansteigt. Dies bedeutet, Symbole die weiter von der Synchronisationssequenz 114 entfernt sind, in der Regel durch Schätzfehler im Empfänger öfter inkorrekt sind als Symbole die (in dem jeweiligen Subdatenpaket 142_1 bis 142_n) näher an der Synchronisationssequenz 144 liegen.

Um diesem Problem zu entgehen, kann eine iterative Dekodierung eingesetzt werden, hierbei werden zunächst die Symbole nahe an der Synchronisationssequenz 144 dekodiert. Diese werden mit Hilfe von einer Reencodierung (engl. reencoding) wieder berechnet und können damit ebenfalls für die Schätzung im Empfänger verwendet werden. Hierdurch steht eine längere Synchronisationssequenz zur Verfügung, mit dessen Hilfe sich die Parameter besser schätzen lassen. Dieser Schritt kann solange wiederholt werden, bis das komplette Telegramm empfangen wurde.

Fig. 6 zeigt eine schematische Ansicht eines Aufbaus der Subdatenpakete 142_1 bis 142_n mit jeweils einer Synchronisationssequenz 144, einer Kernsequenz 147 und einer Erweiterungssequenz 148 zusammen mit einer decoderseitigen Aufteilung des jeweiligen Subdatenpakets entsprechend der Sequenzen für eine iterative Decodierung. Der Aufbau des in Fig. 6 gezeigten Subdatenpakets entspricht dem Aufbau des in Fig. 5 gezeigten Subdatenpakets.

Wie in Fig. 6 angedeutet ist, kann in einem nullten Schritt 150 die Kernsequenz 147 unter Verwendung der Synchronisationssequenz 144 decodiert werden. In einem ersten Schritt 152 kann die decodierte Kernsequenz (öder zumindest ein Teil der decodierten Kernsequenz) reencodiert werden, um eine reencodierte Kernsequenz zu erhalten, und ein erster Teil der Erweiterungssequenz 148 unter Verwendung der reencodierten Kernsequenz decodiert werden. In einem zweiten Schritt 154 kann der decodierte erste Teil der Erweiterungssequenz (oder zumindest ein Teil derselben) reencodiert werden, um einen reencodierten ersten Teil der Erweiterungssequenz zu erhalten, und ein zweiter Teil der Erweiterungssequenz 148 unter Verwendung des reencodierten ersten Teils der Erweiterungssequenz decodiert werden.

Mit anderen Worten, Fig. 6 zeigt eine iterative Decodierung am Beispiel eines Teilpakets (Subdatenpakets). Hierbei kann zunächst der Kern 147 im Schritt 0 decodiert werden. Sind dessen Daten vorhanden, kann eine Reencodierung durchgeführt werden und für die Schätzung verlängert sich somit die Synchronisationssequenz 144 um die beiden Teile aus Schritt 0. Danach kann die Schätzung erneut durchgeführt werden und die Daten aus Schritt 1 decodiert werden. In ähnlicher Weise kann dies für Schritt 2 auch durchgeführt werden.

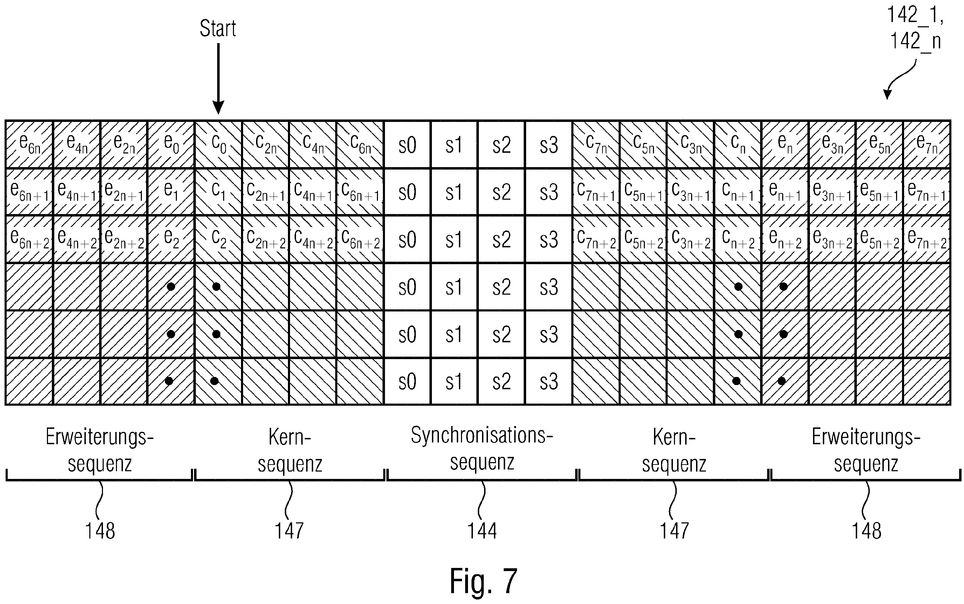

Damit diese Art von iterativer Decodierung möglich ist, kann der Interleaver (dt. Einrichtung zum Verschachteln von Daten) diese Anforderung erfüllen. Es gibt auch hier verschiedene Möglichkeiten der Gestaltung. Zu beachten ist hierbei, dass die Daten für jeden Decodier-Schritt weiter nach außen (also von der Synchronisationssequenz 144 weg) angebracht werden. Ein Beispiel für einen solchen Interleaver zeigt Fig. 7.

Im Detail zeigt Fig. 7 eine schematische Ansicht eines Aufbaus der Subdatenpakete 142_1 bis 142_n mit jeweils einer Synchronisationssequenz 144, einer Kernsequenz 147 und einer Erweiterungssequenz 148, wobei die Daten entsprechend der Kernsequenz 147 und der Erweiterungssequenz 148 in den jeweiligen Subdatenpaketen 142_1 bis 142_n so angeordnet sind, dass ein Abstand der codierten Daten in Bezug auf eine Einflusslänge eines für die Codierung der Daten verwendeten Codes erhöht (oder maximiert) ist.

Mit anderen Worten, Fig. 7 zeigt ein Beispiel eines Interleavers für eine iterative Decodierung. Hierbei erfolgt die Decodierung iterativ in zwei Schritten, zunächst wird der Kern decodiert und anschließend die Erweiterung.

Bei Ausführungsbeispielen kann (senderseitig bzw. wellenformseitig) das Interleaver-Design so gewählt sein, dass eine iterative Decodierung möglich ist. Die Encodierung des Telegramms kann so erfolgen, dass eine vorzeitige Teil-Decodierung mit nur einem Teil der Daten möglich ist.

Bei Ausführungsbeispielen kann (empfängerseitig bzw. decoderseitig) der Decoder einen Teil der Nachricht (oder des Subdatenpakets) decodieren und die gewonnene Information für eine erneute Schätzung von Frequenz, Phase und/oder Zeit nutzen.

### Sechstes detailliertes Ausführungsbeispiel

Durch eine vorgegebene Latenzanforderung an das System, dürfen die Pausen zwischen den Teilpaketen (Subdatenpaketen) 142_1 bis 142_n eine maximale Länge nicht überschreiten, um alle Teilpakete 142_1 bis 142_n innerhalb der Anforderung (innerhalb des fest vorgegebenen Zeitintervalls 143) übertragen zu können. Dies bedeutet, dass die Abstände zwischen den Teilpaketen 142_1 bis 142_n nicht beliebig groß werden können.

Durch den Einsatz von Quarzen, welche immer eine Toleranz besitzen, muss das gesamte Telegramm in einer gewissen Dauer übertragen werden, da sonst die Symbolzeiten relativ zum Detektionszeitpunkt nicht mehr eingehalten werden können. Diese Zeitspanne, in welcher das gesamte Telegramm übertragen werden muss, nennt sich Kohärenzzeit. Durch diesen Effekt ist es ebenfalls notwendig die Dauer der Pausen zwischen den Teilpakten zu begrenzen.

Bei einem minimal definierten Abstand zwischen zwei Synchronisationssequenzen aufeinanderfolgender Teilpakete 142_1 bis 142_n gibt es eine Maximalgröße, die die Teilpakete 142_1 bis 142_n nicht überschreiten dürfen, welche genau dann erreicht ist, wenn die Pause vollständig mit Symbolen der beiden Teilpakete gefüllt ist.

In der Praxis ist es jedoch besser die Maximalgröße geringer zu definieren, damit zwischen den Teilpaketen 142_1 bis 142_n noch eine Pause eingehalten wird, um robuster gegen Störungen zu werden und unter Umständen die Energiespeicher wieder laden zu können.

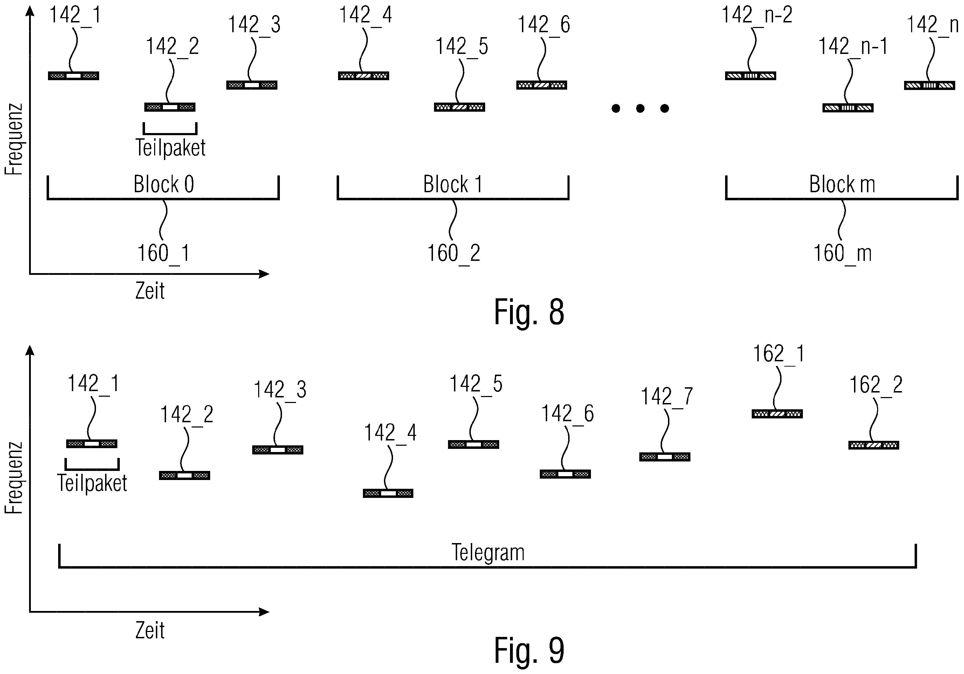

Um die Maximalgröße des Telegramms durch die Begrenzung der Dauer der Pausen nicht zu begrenzen, kann das Telegramm in sog. Blöcke unterteilt werden. Dies bedeutet, ist die oben genannte Maximallänge der Teilpakete erreicht, wird das Signal in mindestens zwei Blöcke gesplittet. Dieses Schema ist in Fig. 8 zu sehen.

Im Detail zeigt Fig. 8 in einem Diagramm eine Belegung eines Übertragungskanals bei der Übertragung von Daten unter Verwendung einer Mehrzahl von Subdatenpaketen 142_1 bis 142 _n, die in Blöcken 160_1 bis 160_m zusammengefasst sind. Dabei beschreibt die Ordinate die Frequenz und die Abszisse die Zeit.

Die Subdatenpakete 142_1 bis 142 _n können dabei (gleichmäßig) auf m Blöcke 160_1 bis 160_m aufgeteilt werden, so dass jeder der m Blöcke 160_1 bis 160_m zumindest zwei Subdatenpakete aufweist.

Wie in Fig. 8 beispielhaft zu erkennen ist, können die Subdatenpakete 142_1 bis 142 _n in Blöcke 160_1 bis 160_m von je drei Subdatenpaketen zusammengefasst werden, so dass ein erster Block 160_1 die Subdatenpakete 142_1 bis 142_3, ein zweiter Block 160_2 die Subdatenpakete 142_4 bis 142_6, und ein m-ter Block 160_m die Subdatenpakete 142_n-2 bis 142_n aufweist.

Mit anderen Worten, Fig. 8 zeigt eine Unterteilung eines Telegramms in mehrere Blöcke 160_1 bis 160_m. Hierbei kann die Anzahl, die Länge, die Synchronisationssequenzen und auch das Sprungmuster in jedem Block 160_1 bis 160_m beliebig und unabhängig vom vorherigen gewählt werden, solange es dem Empfänger bekannt ist.

Ein großer Vorteil der Unterteilung des Telegramms in Blöcke 160_1 bis 160_m ist die erhöhte Kohärenzzeit, da die Blöcke 160_1 bis 160_m für sich selbst detektierbar sind. Hierdurch kann der Synchronisationszeitpunkt, welcher durch Quarzoffsets wegläuft, nach jedem Block neu berechnet und entsprechend nachgezogen werden.

Wird eine Fehlerkorrektur eingesetzt, ist es möglich die Codierung entweder über das gesamte Telegramm zu berechnen oder die Codierung für jeden Block 160_1 bis 160_m getrennt zu betrachten. Letzteres besitzt den Vorteil, dass vorzeitig ein Teil des Telegramms decodiert werden kann. Ist bei dieser vorzeitigen Decodierung ein Fehler aufgetreten und die gesendeten Daten können nicht rekonstruiert werden, kann der Empfang der weiteren Blöcke 160_1 bis 160_m abgebrochen werden und somit der Stromverbrauch reduziert werden.

Bei Ausführungsbeispielen kann (senderseitig bzw. wellenformseitig) ein Telegramm in mindestens zwei unabhängige Blöcke 160_1 bis 160_m zerlegt werden, welche für sich selbst detektierbar sind. Hierbei kann die Anzahl der Teilpakete 142_1 bis 142_n der Blöcke 160_1 bis 160_m unterschiedlich sein, die Länge zwischen den Blöcken 160_1 bis 160_m variieren und auch das Sprungmuster unabhängig voneinander sein.

Bei Ausführungsbeispielen können (empfängerseitig bzw. decoderseitig) nach der Detektion eines ersten Blocks weitere Blöcke dekodiert werden und die Empfangsdaten aus beiden Blöcken zusammengeführt werden. Der Empfänger kann die Möglichkeit besitzen jeden Block für sich selbst neu zu synchronisieren.

### Siebtes detailliertes Ausführungsbeispiel

Es ist ebenfalls möglich die Anzahl und Größe der kommenden Blöcke im ersten oder jeweils vorherigen Block zu signalisieren, somit ist auch hier eine flexible Telegrammlänge möglich. Auch können die Abstände und das Sprungmuster zu den folgenden Blöcken signalisiert werden. Soll ein pseudozufälliges Muster generiert werden, kann z. B. ein Teil der übertragenen Daten (z. b. CRC (CRC = Cyclic Redundancy Check, dt. zyklische Redundanzprüfung) oder unbekannte Nutzerdaten) aus dem vorherigen Block zur Generierung der Abstände, Sprungmuster, Synchronisationssequenz und weiteren Übertragungsparametern abgeleitet werden.

Bei Ausführungsbeispielen kann (senderseitig bzw. wellenformseitig) eine Signalisierung einer Anzahl, einer Größe, eines Sprungmusters, usw. im ersten oder vorherigen Block erfolgen.

Bei Ausführungsbeispielen kann (empfängerseitig bzw. decoderseitig) die Decodierung des gesamten Telegramms Schrittweise erfolgen, nachdem ein Teil der bereits decodierten Information für die Signalisierung der folgenden Blöcke verwendet wird.

### Achtes detailliertes Ausführungsbeispiel

Anstelle der Unterteilung in Blöcke 160_1 bis 160_m ist es ebenfalls möglich einzelne Teilpakete (Subdatenpakete) dem Telegramm hinzuzufügen, um die Maximallänge des Telegramms weiter zu erhöhen. Dieses Verfahren wird in der DE 10 2011 082 098 B4 ausführlich beschrieben.

Das dort beschriebene Verfahren besitzt jedoch den Nachteil, dass die Längen der Teilpakete nicht verändert werden konnten. Mit dem hierin Verfahren lässt sich nun eine Kombination aus variablen Teilpaketlängen und deren Anzahl realisieren.

Es ist ebenfalls eine Kombination aus den in dem sechsten detaillierten Ausführungsbeispiel beschriebenen Blöcken und dem Einfügen von einzelnen Teilpaketen möglich. Hierdurch ergibt sich ein hohes Maß an Flexibilität. Werden beispielsweise nur wenige Daten über der Maximalgröße eines Blocks benötigt, ist es sinnvoll einzelne Teilpakete dem Telegramm hinzuzufügen. Werden jedoch mehr Daten angefügt ist es besser einen neuen Block zu erzeugen, da die Kohärenzzeit verlängert wird.

Ähnlich zum siebten detaillierten Ausführungsbeispiel ist es hier ebenfalls möglich kommende Teilpakete in vorherigen Daten zu signalisieren. Sei es die Anzahl, die Länge, das Sprungmuster oder weitere Übertragungsparameter.

Fig. 9 zeigt in einem Diagramm eine Belegung eines Übertragungskanals bei der Übertragung der Daten 120 variabler Länge unter Verwendung einer vorgegebenen Anzahl an Subdatenpaketen 142_1 bis 142_7, wobei der vorgegebenen Anzahl an Subdatenpaketen 142_1 bis 142_7 zusätzliche Subdatenpakete 162_1 und 162_2 angehängt sind.

Die der Daten 120 variabler Länge können bei einer Überschreitung einer maximal zulässigen Länge, die bei der Übertragung der Daten 120 variabler Länge innerhalb des vorgegebenen Zeitintervalls eine Unterschreitung eines zeitlichen definierten Mindestabstands zwischen den Subdatenpaketen 142_1 bis 142_7 oder sogar eine Überlappung der Subdatenpakete 142_1 bis 142_7 zur Folge hätte, auf weitere Subdatenpakete 162_1 und 162_2 aufgeteilt werden.

Mit anderen Worten, Fig. 9 zeigt einen Aufbau eines Telegramms mit variabler Anzahl an Teilpaketen.

Bei Ausführungsbeispielen kann (senderseitig bzw. wellenformseitig) die Anzahl der verwendeten Teilpakete nicht konstant sein und zusätzlich können die Längen der Teilpakete variieren.

Bei Ausführungsbeispielen kann (empfängerseitig bzw. decoderseitig) nach der Detektion eines ersten Blocks weitere Teilpakete empfangen werden, die nicht selbstständig decodiert werden können. Das Sprungmuster dieser Teilpakete kann definiert sein oder übertragen werden.

### Weitere Ausführungsbeispiele

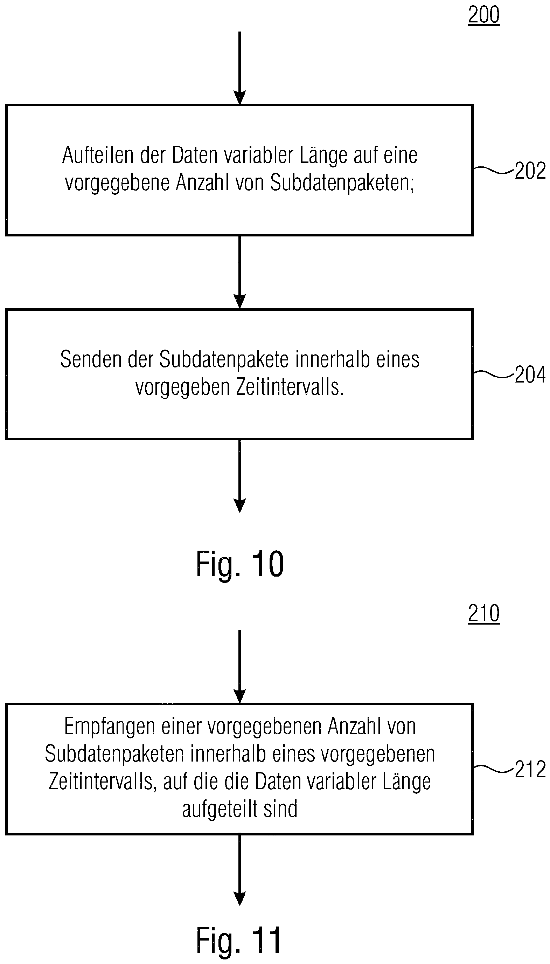

Fig. 10 zeigt ein Flussdiagramm eines Verfahrens 200 zum Senden von Daten variabler Länge. Das Verfahren 200 umfasst einen Schritt 202 des Aufteilens der Daten variabler Länge auf eine vorgegebene Anzahl von Subdatenpaketen und einen Schritt 204 des Aussendens der Subdatenpakete.

Fig. 11 zeigt ein Flussdiagramm eines Verfahrens 210 zum Empfangen von Daten variabler Länge. Das Verfahren 210 umfasst einen Schritt 212 des Empfangens einer vorgegebenen Anzahl von Subdatenpaketen, auf die die Daten variabler Länge aufgeteilt sind.

Bei Ausführungsbeispielen können Teilpaketlängen bei gleichbleibender Anzahl an Teilpaketen variieren.

Bei Ausführungsbeispielen kann eine iterative Dekodierung zur Gewinnung der Längeninformation erfolgen.

Bei Ausführungsbeispielen kann eine Unterteilung eines Telegramms in Blöcke mit ggf. getrennter Dekodierung erfolgen.

Ausführungsbeispiele schaffen ein System zur Übertragung von Daten von vielen Sensorknoten zu einer Basisstation. Die hierin beschriebenen Konzepte können jedoch für jede beliebige Übertragung eingesetzt werden, falls der Kanal nicht koordiniert (ALOHA oder Slotted-ALOHA Zugriffsverfahren) ist und der Empfänger somit nicht weiß wann ein Paket übertragen wird. Zusätzlich kann es hierdurch zu Überlagerungen mit anderen Teilnehmern kommen, was Störungen während der Übertragung hervorruft.

Das genutzte Funkübertragungsband kann, muss aber hierbei nicht exklusiv für diese Übertragung reserviert sein. Die Frequenzressource kann mit vielen weiteren Systemen geteilt werden, was eine zuverlässige Übertragung der Information erschwert.

Bei Ausführungsbeispielen können unterschiedlich lange Nutzdaten in einem Telegramm übertragen werden. Hierbei kann das Telegram Splitting Verfahren eingesetzt werden durch welches es möglich ist die Längen der Teilpakete zu variieren, wodurch keine zusätzliche Signalisierungsinformation nötig ist.

Bei Ausführungsbeispielen kann die Schätzgenauigkeit durch iterative Decodierung für längere Teilpakete erhöht werden.

Bei Ausführungsbeispielen kann ein Telegramm in mehrere voneinander unabhängige Blöcke zerlegt werden. Hierdurch kann die maximale Anzahl an zu übertragenden Daten weiter erhöht werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahingehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nicht-vergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahingehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahingehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) oder eine Grafikkarte (GPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Datensender (100) zum Senden von Daten (120) variabler Länge, wobei der Datensender (100) ausgebildet ist, um die Daten (120) variabler Länge auf eine vorgegebene Anzahl von Subdatenpaketen (142_1:142_n) aufzuteilen, und um die Subdatenpakete (142_1:142_n) auszusenden;
wobei die Daten variabler Länge Nutzdaten aufweisen;
**gekennzeichnet dadurch, dass** eine Anzahl von Symbolen der einzelnen Subdatenpakete (142_1:142_n) von einer Länge der Daten variabler Länge abhängig ist.

2. Datensender (100) nach Anspruch 1, wobei der Datensender (100) ausgebildet ist, um die Daten variabler Länge unabhängig von einer Länge derselben immer auf die gleiche Anzahl von Subdatenpaketen aufzuteilen.

3. Datensender (100) nach einem der Ansprüche 1 bis 2, wobei der Datensender (100) ausgebildet ist, um die Subdatenpakete (142_1:142_n) mit einem von der Länge der Daten (120) variabler Länge abhängigen zeitlichen Abstand auszusenden, so dass ein zeitlicher Abstand zwischen vorgegebenen Bereichen der Subdatenpakete (142_1:142_n) unabhängig von einer Länge der Daten (120) variabler Länge konstant ist.

4. Datensender (100) nach einem der Ansprüche 1 bis 3, wobei der Datensender (100) ausgebildet ist, um zumindest einen Teil der Subdatenpakete (142_1:142_n) mit Synchronisationssequenzen (144) zu versehen.

5. Datensender (100) nach einem der Ansprüche 1 bis 3, wobei der Datensender (100) ausgebildet ist, um zumindest einen Teil der Subdatenpakete (142_1:142_n) mit Subsynchronisationssequenzen (144) zu versehen.

6. Datensender (100) nach Anspruch 5, wobei der Datensender (100) ausgebildet ist, um die Subdatenpakete (142_1:142_n) mit einem von der Länge der Daten (120) variabler Länge abhängigen zeitlichen Abstand auszusenden, so dass ein zeitlicher Abstand zwischen (t₀,t₁,t₂) den Subsynchronisationssequenzen (144) der Subdatenpakete (142_1:142_n) unabhängig von einer Länge der Daten (120) variabler Länge konstant ist.

7. Datensender (100) nach einem der Ansprüche 1 bis 6, wobei die Daten (120) Kerndaten und Erweiterungsdaten umfassen, wobei die Kerndaten eine feste Länge aufweisen und die Erweiterungsdaten eine variable Länge aufweisen.

8. Datensender (100) nach Anspruch 7, wobei der Datensender (100) ausgebildet ist, um die Kerndaten mit einer Signalisierungsinformation zur Signalisierung der Länge der Erweiterungsdaten zu versehen.

9. Datensender (100) nach einem der Ansprüche 7 bis 8, wobei der Datensender (100) ausgebildet ist, um die Kerndaten derart auf die Subdatenpakete (142_1:142_n) aufzuteilen, dass in den Subdatenpaketen (142_1:142_n) der jeweilige Teil der Kerndaten benachbart zu den (Sub-)Synchronisationssequenzen angeordnet ist.

10. Datensender (100) nach Anspruch 9, wobei der Datensender (100) ausgebildet ist, um die Kerndaten derart auf die Subdatenpakete (142_1:142_n) aufzuteilen, dass in den Subdatenpaketen der jeweilige Teil der Kerndaten gleichmäßig vor und nach der jeweiligen (Sub-)Synchronisationssequenzen (144) angeordnet ist.

11. Datensender (100) nach Anspruch 9 bis 10, wobei der Datensender (100) ausgebildet ist, um die Erweiterungsdaten derart auf die Subdatenpakete (142_1:142_n) aufzuteilen, dass in den Subdatenpaketen (142_1:142_n) der jeweilige Teil der Erweiterungsdaten benachbart zu dem jeweiligen Teil der Kerndaten angeordnet ist.

12. Datensender (100) nach Anspruch 11, wobei der Datensender (100) ausgebildet ist, um die Erweiterungsdaten derart auf die Subdatenpakete (142_1:142_n) aufzuteilen, dass in den Subdatenpaketen (142_1:142_n) der jeweilige Teil der Erweiterungsdaten gleichmäßig vor und nach dem jeweiligen Teil der Kerndaten angeordnet ist.

13. Datensender (100) nach einem der Ansprüche 1 bis 12, wobei der Datensender (100) ausgebildet ist, um die Anzahl von Subdatenpaketen (142_1:142_n) in zumindest zwei unabhängige Blöcke (160_1:160_m) von Subdatenpaketen (142_1:142_n) aufzuteilen; wobei der Datensender (100) ausgebildet ist, um die Subdatenpakete (142_1:142_n) derart in die zumindest zwei Blöcke (160_1:160_m) von Subdatenpaketen (142_1:142_n) aufzuteilen, dass ein erster Block der zumindest zwei Blöcke (160_1:160_m) von Subdatenpaketen (142_1:142_n) für sich selbst empfängerseitig detektierbar ist.

14. Datensender (100) nach Anspruch 13, wobei der Datensender (100) ausgebildet ist, um den ersten Block von Subdatenpaketen mit einer Information über einen zweiten Block von Subdatenpaketen (142_1:142_n) der zumindest zwei Blöcke (160_1:160_m) von Subdatenpaketen zu versehen.

15. Datensender (100) nach Anspruch 14, wobei die Information zumindest eines aus einer Länge, einer Anzahl von Subdatenpaketen (142_1:142_n) und ein Sprungmuster, mit der die Subdatenpakete gesendet werden, signalisiert.

16. Datenempfänger (110) zum Empfangen von Daten (120) variabler Länge, wobei der Datenempfänger (110) ausgebildet ist, um eine vorgegebene Anzahl von Subdatenpaketen (142_1:142_n) zu empfangen, auf die die Daten (120) variabler Länge aufgeteilt sind;
wobei die Daten variabler Länge Nutzdaten aufweisen;
**dadurch gekennzeichnet, dass** eine Anzahl von Symbolen der einzelnen Subdatenpakete (142_1:142_n) von einer Länge der Daten variabler Länge abhängig ist.

17. Datenempfänger nach Anspruch 16, wobei die Daten variabler Länge unabhängig von einer Länge derselben immer auf die gleiche Anzahl von Subdatenpaketen (142_1:142_n) aufgeteilt sind.

18. Datenempfänger (110) nach einem der Ansprüche 16 bis 17, wobei zumindest ein Teil der Subdatenpakete (142_1:142_n) mit Synchronisationssequenzen (144) versehen ist;
wobei der Datenempfänger (110) ausgebildet ist, um die Subdatenpakete (142_1:142_n) basierend auf den Synchronisationssequenzen (144) zu detektieren.

19. Datenempfänger (110) nach einem der Ansprüche 16 bis 17, wobei zumindest ein Teil der Subdatenpakete (142_1:142_n) mit Subsynchronisationssequenzen (144) versehen ist;
wobei der Datenempfänger (110) ausgebildet ist, um die Subdatenpakete (142_1:142_n) basierend auf den Subsynchronisationssequenzen (144) zu detektieren.

20. Datenempfänger (110) nach Anspruch 19, wobei der zeitliche Abstand zwischen den Subsynchronisationssequenzen (144) konstant ist und/oder dem Datenempfänger (110) bekannt ist.

21. Datenempfänger (110) nach einem der Ansprüche 16 bis 20, wobei die Daten (120) variabler Länge Kerndaten und Erweiterungsdaten umfassen, wobei die Kerndaten eine feste Länge aufweisen und die Erweiterungsdaten eine variable Länge aufweisen.

22. Datenempfänger (110) nach Anspruch 21, wobei die Kerndaten mit einer Signalisierungsinformation zur Signalisierung der Länge der Erweiterungsdaten versehen sind;
wobei der Datenempfänger (110) ausgebildet ist, um die Erweiterungsdaten unter Verwendung der Signalisierungsinformation zu empfangen oder aus den Subdatenpaketen zu extrahieren.

23. Datenempfänger (110) nach einem der Ansprüche 21 bis 22, wobei die Kerndaten derart auf die Subdatenpakete (142_1:142_n) aufgeteilt sind, dass in den Subdatenpaketen (142_1:142_n) der jeweilige Teil der Kerndaten benachbart zu den (Sub-)Synchronisationssequenzen angeordnet ist.

24. Datenempfänger (110) nach Anspruch 23, wobei die Kerndaten derart auf die Subdatenpakete (142_1:142_n) aufgeteilt sind, dass in den Subdatenpaketen (142_1:142_n) der jeweilige Teil der Kerndaten gleichmäßig vor und nach der jeweiligen (Sub-)Synchronisationssequenz angeordnet ist.

25. Datenempfänger (110) nach einem der Ansprüche 21 bis 24, wobei die Erweiterungsdaten derart auf die Subdatenpakete (142_1:142_n) aufgeteilt sind, dass in den Subdatenpaketen (142_1:142_n) der jeweilige Teil der Erweiterungsdaten benachbart zu dem jeweiligen Teil der Kerndaten angeordnet ist.

26. Datenempfänger (110) nach Anspruch 25, wobei die Erweiterungsdaten derart auf die Subdatenpakete (142_1:142_n) aufgeteilt sind, dass in den Subdatenpaketen (142_1:142_n) der jeweilige Teil der Erweiterungsdaten gleichmäßig vor und nach dem jeweiligen Teil der Kerndaten angeordnet ist.

27. Datenempfänger (110) nach einem der Ansprüche 21 bis 26, wobei die Kerndaten in Abhängigkeit von Längen der (Sub-)Synchronisationssequenz auf die Subdatenpakete (142_1:142_n) aufgeteilt sind, so dass Subdatenpakete (142_1:142_n) mit längeren (Sub-)Synchronisationssequenz einen größeren Teil an Kerndaten enthalten als Subdatenpakete (142_1:142_n) mit kürzeren (Sub-)Synchronisationssequenz;
wobei der Datenempfänger (110) ausgebildet ist, um Längen der Teile an Kerndaten, die in den jeweiligen Subdatenpaketen (142_1:142_n) enthalten sind, basierend auf den Längen der (Sub-)Synchronisationssequenz zu ermitteln, die in den jeweiligen Subdatenpaketen (142_1:142_n) enthalten sind.

28. Datenempfänger (110) nach einem der Ansprüche 21 bis 26, wobei die Erweiterungsdaten in Abhängigkeit von Längen der (Sub-)Synchronisationssequenz auf die Subdatenpakete (142_1:142_n) aufgeteilt sind, so dass Subdatenpakete (142_1:142_n) mit längeren (Sub-)Synchronisationssequenz einen größeren Teil an Erweiterungsdaten enthalten als Subdatenpakete (142_1:142_n) mit kürzeren (Sub- )Synchronisationssequenz;
wobei der Datenempfänger (110) ausgebildet ist, um Längen der Teile an Erweiterungsdaten, die in den jeweiligen Subdatenpaketen (142_1:142_n) enthalten sind, basierend auf den Längen der (Sub-)Synchronisationssequenz zu ermitteln, die in den jeweiligen Subdatenpaketen (142_1:142_n) enthalten sind.

29. Datenempfänger (110) nach einem der Ansprüche 23 bis 28,
wobei der Datenempfänger (110) ausgebildet ist, um einen ersten Bereich des jeweiligen Teils der Daten (120) variabler Länge unter Verwendung der (Sub- )Synchronisationssequenzen zu decodieren und zu reencodieren, um einen ersten Teilbereich von reencodierten Daten zu erhalten;
wobei der Datenempfänger (110) ausgebildet ist, um einen zweiten Bereich des jeweiligen Teils der Daten (120) variabler Länge unter Verwendung des ersten Teilbereichs von reencodierten Daten zu decodieren.

30. Datenempfänger (110) nach Anspruch 29, wobei der Datenempfänger (110) ausgebildet ist, um den zweiten Bereich des jeweiligen Teils der Daten (120) variabler Länge unter Verwendung des ersten Teilbereichs von reencodierten Daten zu decodieren, um einen zweiten Teilbereich von reencodierten Daten zu erhalten;
wobei der Datenempfänger (110) ausgebildet ist, um einen dritten Bereich des jeweiligen Teils der Daten (120) variabler Länge unter Verwendung des zweiten Teilbereichs von reencodierte Daten zu decodieren.

31. Datenempfänger (110) nach einem der Ansprüche 29 bis 30, wobei in den jeweiligen Subdatenpaketen (142_1:142_n) der erste Bereich unmittelbar benachbart zu der (Sub-)Synchronisationssequenz angeordnet ist, und wobei der zweite Bereich unmittelbar benachbart zu dem ersten Bereich angeordnet ist.

32. Datenempfänger (110) nach einem der Ansprüche 17 bis 31, wobei die Anzahl von Subdatenpaketen in zumindest zwei unabhängige Blöcke (160_1:160_m) von Subdatenpaketen (142_1:142_n) derart aufgeteilt ist, so dass ein erster Block der zumindest zwei Blöcke von Subdatenpaketen (142_1:142_n) für sich selbst detektierbar ist;
wobei der Datenempfänger (110) ausgebildet ist, um den ersten Block der zumindest zwei Blöcke von Subdatenpaketen (142_1:142_n) für sich selbst zu detektieren.

33. Datenempfänger (110) nach Anspruch 32, wobei der erste Block von Subdatenpaketen der zumindest zwei Blöcke (160_1:160_m) von Subdatenpaketen (142_1:142_n) mit einer Information über einen zweiten Block der zumindest zwei Blöcke (160_1:160_m) von Subdatenpaketen (142_1:142_n) versehen ist;
wobei der Datenempfänger (110) ausgebildet ist, um den zweiten Block der zumindest zwei Blöcke (160_1:160_m) von Subdatenpaketen (142_1:142_n) unter Verwendung der Information zu empfangen.

34. System, mit folgenden Merkmalen:
einem Datensender (100) nach einem der Ansprüche 1 bis 16; und
einem Datenempfänger (110) nach einem der Ansprüche 17 bis 33.

35. Verfahren (200) zum Senden von Daten variabler Länge, mit folgenden Schritten:
Aufteilen (202) der Daten variabler Länge auf eine vorgegebene Anzahl von Subdatenpaketen; und
Senden (204) der Subdatenpakete innerhalb eines vorgegeben Zeitintervalls;
wobei die Daten variabler Länge Nutzdaten aufweisen;
**dadurch gekennzeichnet, dass** eine Anzahl von Symbolen der einzelnen Subdatenpakete (142_1:142_n) von einer Länge der Daten variabler Länge abhängig ist.

36. Verfahren (210) zum Empfangen von Daten variabler Länge, mit folgenden Schritten:
Empfangen (212) einer vorgegebenen Anzahl von Subdatenpaketen innerhalb eines vorgegebenen Zeitintervalls, auf die die Daten variabler Länge aufgeteilt sind;
wobei die Daten variabler Länge Nutzdaten aufweisen;
**dadurch gekennzeichnet, dass** eine Anzahl von Symbolen der einzelnen Subdatenpakete (142_1:142_n) von einer Länge der Daten variabler Länge abhängig ist.

37. Computerprogramm, umfassend Befehle, die bei der Ausführung des Programms durch einen Computer diesen veranlassen, das Verfahren nach Anspruch 35 oder nach Anspruch 36 auszuführen.

## Claims

1. Data transmitter (100) for transmitting data (120) of variable length, wherein the data transmitter (100) is configured to distribute the data (120) of variable length to a specified number of sub-data packets (142_1:142_n) and to transmit the sub-data packets (142_1:142_n);
wherein the data of variable length comprises payload data;
**characterized in that**
a number of symbols of the individual sub-data packets (142_1:142_n) depends on a length of the data of variable length.

2. Data transmitter (100) according to claim 1, wherein the data transmitter (100) is configured to distribute the data of variable length regardless of its length always to the same number of sub-data packets.

3. Data transmitter (100) according to any one of claims 1 to 2, wherein the data transmitter (100) is configured to transmit the sub-data packets (142_1:142_n) with a temporal distance depending on the length of the data (120) of variable length so that a temporal distance between specified regions of the sub-data packets (142_1:142_n) is constant regardless of a length of the data (120) of variable length.

4. Data transmitter (100) according to any one of claims 1 to 3, wherein the data transmitter (100) is configured to provide at least a part of the sub-data packets (142_1:142_n) with synchronization sequences (144).

5. Data transmitter (100) according to any one of claims 1 to 3, wherein the data transmitter (100) is configured to provide at least a part of the sub-data packets (142_1:142_n) with sub-synchronization sequences (144).

6. Data transmitter (100) according to claim 5, wherein the data transmitter (100) is configured to transmit the sub-data packets (142_1:142_n) with a temporal distance depending on the length of the data (120) of variable length so that a temporal distance (t₀,t₁,t₂) between the synchronization sequences (144) of the sub-data packets (142_1:142_n) is constant regardless of a length of the data (120) of variable length.

7. Data transmitter (100) according to any one of claims 1 to 6, wherein the data (120) includes core data and extension data, wherein the core data comprises a fixed length and the extension data comprises a variable length.

8. Data transmitter (100) according to claim 7, wherein the data transmitter (100) is configured to provide the core data with signaling information for signaling the length of the extension data.

9. Data transmitter (100) according to any one of claims 7 to 8, wherein the data transmitter (100) is configured to distribute the core data to the sub-data packets (142_1:142_n) such that the respective part of the core data is arranged adjacent to the (sub-)synchronization sequences in the sub-data packets (142_1:142_n).

10. Data transmitter (100) according to claim 9, wherein the data transmitter (100) is configured to distribute the core data to the sub-data packets (142_1:142_n) such that the respective part of the core data is arranged evenly in front of and behind the respective (sub-)synchronization sequences (144) in the sub-data packets.

11. Data transmitter (100) according to any one of claims 9 to 10, wherein the data transmitter (100) is configured to distribute the extension data to the sub-data packets (142_1:142_n) such that the respective part of the extension data is arranged adjacent to the respective part of the core data in the sub-data packets (142_1:142_n).

12. Data transmitter (100) according to claim 11, wherein the data transmitter (100) is configured to distribute the extension data to the sub-data packets (142_1:142_n) such that the respective part of the extension data is evenly arranged in front of and behind the respective part of the core data in the sub-data packets (142_1:142_n).

13. Data transmitter (100) according to any one of claims 1 to 12, wherein the data transmitter (100) is configured to divide the number of sub-data packets (142_1:142_n) into at least two independent blocks (160_1:160_m) of sub-data packets (142_1:142_n);
wherein the data transmitter (100) is configured to divide the sub-data packets (142_1:142_n) in such a way into the at least two blocks (160_1:160_m) of sub-data packets (142_1 :142_n) that a first block of the at least two blocks (160_1:160_m) of sub-data packets (142_1:142_n) may be individually detected on the receiver side.

14. Data transmitter (100) according to claim 13, wherein the data transmitter (100) is configured to provide the first block of sub-data packets with information about a second block of sub-data packets (142_1:142_n) of the at least two blocks (160_1:160_m) of sub-data packets.

15. Data transmitter (100) according to claim 14, wherein the information signals at least one of a length, a number of sub-data packets (142_1: 142_n) and a hopping pattern with which the sub-data packets are transmitted.

16. Data receiver (110) for receiving data (120) of variable length, wherein the data receiver (110) is configured to receive a specified number of sub-data packets (142_1:142_n) to which the data (120) of variable length is distributed;
wherein the data of variable length comprises payload data;
**characterized in that**
a number of symbols of the individual sub-data packets (142_1:142_n) depends on a length of the data of variable length.

17. Data receiver according to claim 16, wherein the data of variable length regardless of its length is always distributed to an equal number of sub-data packets (142_1:142_n).

18. Data receiver (110) according to any one of claims 16 to 17, wherein at least a part of the sub-data packets (142_1:142_n) is provided with synchronization sequences (144);
wherein the data receiver (110) is configured to detect the sub-data packets (142_1:142_n) based on the synchronization sequences (144).

19. Data receiver (110) according to any one of claims 16 to 17, wherein at least a part of the sub-data packets (142_1:142_n) is provided with sub-synchronization sequences (144);
wherein the data receiver (110) is configured to detect the sub-data packets (142_1;142_n) based on the sub-synchronization sequences (144).

20. Data receiver (110) according to claim 19, wherein the temporal distance between the sub-synchronization sequences (144) is constant and/or is known to the data receiver (110).

21. Data receiver (110) according to any one of claims 16 to 20, wherein the data (120) of variable length includes core data and extension data, wherein the core data comprises a fixed length and the extension data comprises a variable length.

22. Data receiver (110) according to claim 21, wherein the core data is provided with signaling information for signaling the length of the extension data;
wherein the data receiver (110) is configured to receive the extension data using the signaling information, or to extract them from the sub-data packets.

23. Data receiver (110) according to any one of claims 21 to 22, wherein the core data is distributed to the sub-data packets (142_1:142_n) such that the respective part of the core data is arranged adjacent to the (sub-)synchronization sequences in the sub-data packets (142_1:142_n).

24. Data receiver (110) according to claim 23, wherein the core data is distributed to the sub-data packets (142_1:142_n) such that the respective part of the core data is evenly arranged in front of and behind the respective (sub-)synchronization sequence in the sub-data packets (142_1:142_n).

25. Data receiver (110) according to any one of claims 21 to 24, wherein the extension data is distributed to the sub-data packets (142_1:142_n) such that the respective part of the extension data is arranged adjacent to the respective part of the core data in the sub-data packets (142_1:142_n).

26. Data receiver (110) according to claim 25, wherein the extension data is distributed to the sub-data packets (142_1:142_n) such that the respective part of the extension data is evenly arranged in front of and behind the respective part of the core data in the sub-data packets (142_1:142_n).

27. Data receiver (110) according to any one of claims 21 to 26, wherein the core data is distributed to the sub-data packets (142_1:142_n) depending on lengths of the (sub-)synchronization sequence so that sub-data packets (142_1:142_n) having a longer (sub-)synchronization sequence contain a larger part of core data than sub-data packets (142_1:142_n) having a shorter (sub-)synchronization sequence;
wherein the data receiver (110) is configured to determine lengths of the parts of core data contained in the respective sub-data packets (142_1:142_n) based on the length of the (sub-)synchronization sequence contained in the respective sub-data packets (142_1:142_n).

28. Data receiver (110) according to any one of claims 21 to 26, wherein the extension data is distributed to the sub-data packets (142_1:142_n) depending on lengths of the (sub-)synchronization sequence so that sub-data packets (142_1:142_n) having a longer (sub-)synchronization sequence contain a larger part of extension data than sub-data packets (142_1:142_n) having a shorter (sub-)synchronization sequence;
wherein the data receiver (110) is configured to determine lengths of the parts of extension data contained in the respective sub-data packets (142_1:142_n) based on the lengths of the (sub-)synchronization sequence contained in the respective sub-data packets (142_1:142_n).

29. Data receiver (110) according to any one of claims 23 to 28,
wherein the data receiver (110) is configured to decode and re-encode a first region of the respective part of the data (120) of variable length using the (sub-)synchronization sequences in order to obtain a first partial region of re-encoded data;
wherein the data receiver (110) is configured to decode a second region of the respective part of the data (120) of variable length using the first partial region of re-encoded data.

30. Data receiver (110) according to claim 29, wherein the data receiver (110) is configured to decode the second region of the respective part of the data (120) of variable length using the first partial region of re-encoded data in order to obtain a second partial region of re-encoded data;
wherein the data receiver (110) is configured to decode a third region of the respective part of the data (120) of variable length using the second partial region of re-encoded data.

31. Data receiver (110) according to any one of claims 29 to 30, wherein, in the respective sub-data packets (142_1:142_n), the first region is arranged directly adjacent to the (sub-)synchronization sequence, and wherein the second region is arranged directly adjacent to the first region.

32. Data receiver (110) according to any one of claims 17 to 31, wherein the number of sub-data packets is split into at least two independent blocks (160_1:160_m) of sub-data packets (142_1:142_n) such that a first block of the at least two blocks of sub-data packets (142_1:142_n) may be individually detected;
wherein the data receiver (110) is configured to individually detect the first block of the at least two blocks of sub-data packets (142_1:142_n).

33. Data receiver (110) according to claim 32, wherein the first block of sub-data packets of the at least two blocks (160_1:160_m) of sub-data packets (142_1:142_n) is provided with information about a second block of the at least two blocks (160_1:160_m) of sub-data packets (142_1:142_n);
wherein the data receiver (110) is configured to receive the second block of the at least two blocks (160_1:160_m) of sub-data packets (142_1:142_n) using the information.

34. System comprising:
a data transmitter (100) according to any one of claims 1 to 16; and
a data receiver (110) according to any one of claims 17 to 33.

35. Method (200) for transmitting data of variable length, comprising:
distributing (202) the data of variable length to a specified number of sub-data packets; and
transmitting (204) the sub-data packets within a specified time interval;
wherein the data of variable length comprises payload data;
**characterized in that**
a number of symbols of the individual sub-data packets (142_1:142_n) depends on a length of the data of variable length.

36. Method (210) for receiving data of variable length, comprising:
receiving (212) a specified number of sub-data packets within a specified time interval, to which the data of variable length is distributed;
wherein the data of variable length comprises payload data;
**characterized in that**
a number of symbols of the individual sub-data packets (142_1:142_n) depends on a length of the data of variable length.

37. Computer program comprising instructions causing, when the program is executed by a computer, the computer to perform the method according to claim 35 or according to claim 36.

## Revendications

1. Emetteur de données (100) pour émettre des données (120) de longueur variable, dans lequel l'émetteur de données (100) est conçu pour répartir les données (120) de longueur variable entre un nombre prédéterminé de sous-paquets de données (142_1:142_n) et pour émettre les sous-paquets de données (142_1:142_n);
dans lequel les données de longueur variable présentent des données utiles;
**caractérisé par le fait qu'**un nombre de symboles des sous-paquets de données (142_1:142_n) individuels dépend d'une longueur des données de longueur variable.

2. Emetteur de données (100) selon la revendication 1, dans lequel l'émetteur de données (100) est conçu pour répartir les données de longueur variable, indépendamment de la longueur de ces dernières, toujours entre le même nombre de sous-paquets de données.

3. Emetteur de données (100) selon l'une des revendications 1 à 2, dans lequel l'émetteur de données (100) est conçu pour émettre les sous-paquets de données (142_1:142_n) à un intervalle de temps dépendant de la longueur des données (120) de longueur variable, de sorte qu'un intervalle de temps entre zones prédéterminées des sous-paquets de données (142_1:142_n) soit constant indépendamment de la longueur des données (120) de longueur variable.

4. Emetteur de données (100) selon l'une des revendications 1 à 3, dans lequel l'émetteur de données (100) est conçu pour pourvoir au moins une partie des sous-paquets de données (142_1:142_n) de séquences de synchronisation (144).

5. Emetteur de données (100) selon l'une des revendications 1 à 3, dans lequel l'émetteur de données (100) est conçu pour pourvoir au moins une partie des sous-paquets de données (142_1:142_n) de sous-séquences de synchronisation (144).

6. Emetteur de données (100) selon la revendication 5, dans lequel l'émetteur de données (100) est conçu pour émettre les sous-paquets de données (142_1:142_n) à un intervalle de temps dépendant de la longueur des données (120) de longueur variable, de sorte qu'un intervalle de temps (t₀, t₁, t₂) entre les sous-séquences de synchronisation (144) des sous-paquets de données (142_1:142_m) soit constant indépendamment de la longueur des données (120) de longueur variable.

7. Emetteur de données (100) selon l'une des revendications 1 à 6, dans lequel les données (120) comportent des données essentielles et des données d'extension, dans lequel les données essentielles présentent une longueur fixe et les données d'extension présentent une longueur variable.

8. Emetteur de données (100) selon la revendication 7, dans lequel l'émetteur de données (100) est conçu pour pourvoir les données essentielles d'une information de signalisation pour signaler la longueur des données d'extension.

9. Emetteur de données (100) selon l'une des revendications 7 à 8, dans lequel l'émetteur de données (100) est conçu pour répartir les données essentielles entre les sous-paquets de données (142_1:142_n) de sorte que la partie respective des données essentielles soit, dans les sous-paquets de données (142_1:142_n), disposée adjacente aux (sous)-séquences de synchronisation.

10. Emetteur de données (100) selon la revendication 9, dans lequel l'émetteur de données (100) est conçu pour répartir les données essentielles entre les sous-paquets de données (142_1:142_n) de sorte que la partie respective des données essentielles soit, dans les sous-paquets de données, disposée de manière uniforme avant et après les (sous)-séquences de synchronisation respectives.

11. Emetteur de données (100) selon la revendication 9 à 10, dans lequel l'émetteur de données (100) est conçu pour répartir les données d'extension entre les sous-paquets de données (142_1:142_n) de sorte que la partie respective des données d'extension soit, dans les sous-paquets de données (142_1:142_n), disposée adjacente à la partie respective des données essentielles.

12. Emetteur de données (100) selon la revendication 11, dans lequel l'émetteur de données (100) est conçu pour répartir les données d'extension entre les sous-paquets de données (142_1:142_n) de sorte que la partie respective des données d'extension soit, dans les sous-paquets de données (142_1:142_n), disposée de manière uniforme avant et après la partie respective des données essentielles.

13. Emetteur de données (100) selon l'une des revendications 1 à 12, dans lequel l'émetteur de données (100) est conçu pour répartir le nombre de sous-paquets de données (142_1:142_n) entre au moins deux blocs indépendants (160_1:160_m) de sous-paquets de données (142_1:142_n);
dans lequel l'émetteur de données (100) est conçu pour répartir les sous-paquets de données (142_1:142_n) entre au moins deux blocs (160_1:160_m) de sous-paquets de données (142_1:142_n) de sorte qu'un premier bloc des au moins deux blocs (160_1:160_m) de sous-paquets de données (142_1:142_n) soit détectable en soi du côté du récepteur.

14. Emetteur de données (100) selon la revendication 13, dans lequel l'émetteur de données (100) est conçu pour pourvoir le premier bloc de sous-paquets de données d'une information sur un deuxième bloc de sous-paquets de données (142_1:142_n) des au moins deux blocs (160_1:160_m) de sous-paquets de données.

15. Emetteur de données (100) selon la revendication 14, dans lequel l'information signale au moins l'un parmi une longueur, un nombre de sous-paquets de données (142_1:142_n) et un modèle de saut avec lequel sont émis les sous-paquets de données.

16. Récepteur de données (110) pour recevoir des données (120) de longueur variable, dans lequel le récepteur de données (110) est conçu pour recevoir un nombre prédéterminé de sous-paquets de données (142_1:142_n) entre lesquels sont réparties les données (120) de longueur variable;
dans lequel les données de longueur variable présentent des données utiles;
**caractérisé par le fait qu'**un nombre de symboles des sous-paquets de données (142_1:142_n) individuels dépend d'une longueur des données de longueur variable.

17. Récepteur de données selon la revendication 16, dans lequel les données de longueur variable sont, indépendamment d'une longueur de ces dernières, toujours réparties entre le même nombre de sous-paquets de données (142_1:142_n).

18. Récepteur de données (110) selon l'une des revendications 16 à 17, dans lequel au moins une partie des sous-paquets de données (142_1:142_n) sont pourvus de séquences de synchronisation (144);
dans lequel le récepteur de données (110) est conçu pour détecter les sous-paquets de données (142_1:142_n) sur base des séquences de synchronisation (144).

19. Récepteur de données (110) selon l'une des revendications 16 à 17, dans lequel au moins une partie des sous-paquets de données (142_1:142_n) est pourvue de sous-séquences de synchronisation (144);
dans lequel le récepteur de données (110) est conçu pour détecter les sous-paquets de données (142_1:142_n) sur base des sous-séquences de synchronisation (144).

20. Récepteur de données (110) selon la revendication 19, dans lequel l'intervalle de temps entre les sous-séquences de synchronisation (144) est constant et/ou est connu du récepteur de données (110).

21. Récepteur de données (110) selon l'une des revendications 16 à 20, dans lequel les données (120) de longueur variable comportent des données essentielles et des données d'extension, dans lequel les données essentielles présentent une longueur fixe et les données d'extension présentent une longueur variable.

22. Récepteur de données (110) selon la revendication 21, dans lequel les données essentielles sont pourvues d'une information de signalisation pour signaler la longueur des données d'extension;
dans lequel le récepteur de données (110) est conçu pour recevoir les données d'extension à l'aide de l'information de signalisation ou pour les extraire des sous-paquets de données.

23. Récepteur de données (110) selon l'une des revendications 21 à 22, dans lequel les données essentielles sont réparties entre les sous-paquets de données (142_1:142_n) de sorte que la partie respective des données essentielles soit, dans les sous-paquets de données (142_1:142_n), disposée adjacente aux (sous)-séquences de synchronisation.

24. Récepteur de données (110) selon la revendication 23, dans lequel les données essentielles sont réparties entre les sous-paquets de données (142_1:142_n) de sorte que la partie respective des données essentielles soit, dans les sous-paquets de données (142_1:142_n), disposée de manière uniforme avant et après la (sous)-séquence de synchronisation respective.

25. Récepteur de données (110) selon l'une des revendications 21 à 24, dans lequel les données d'extension sont réparties entre les sous-paquets de données (142_1:142_n) de sorte que la partie respective des données d'extension soit, dans les sous-paquets de données (142_1:142_n), disposée adjacente à la partie respective des données essentielles.

26. Récepteur de données (110) selon la revendication 25, dans lequel les données d'extension sont réparties entre les sous-paquets de données (142_1:142_n) de sorte que la partie respective des données d'extension soit, dans les sous-paquets de données (142_1:142_n), disposée de manière uniforme avant et après la partie respective des données essentielles.

27. Récepteur de données (110) selon l'une des revendications 21 à 26, dans lequel les données essentielles sont réparties en fonction des longueurs des (sous)-séquences de synchronisation entre les sous-paquets de données (142_1:142_n) de sorte que les sous-paquets de données (142_1:142_n) à (sous)-séquence de synchronisation plus longue contiennent une plus grande partie de données essentielles que les sous-paquets de données (142_1:142_n) à (sous)-séquence de synchronisation plus courte;
dans lequel le récepteur de données (110) est conçu pour déterminer les longueurs des parties de données essentielles qui sont contenues dans les sous-paquets de données (142_1:142_n) respectifs sur base des longueurs des (sous)-séquences de synchronisation qui sont contenues dans les sous-paquets de données (142_1:142_n) respectifs.

28. Récepteur de données (110) selon l'une des revendications 21 à 26, dans lequel les données d'extension sont réparties en fonction des longueurs de la (sous)-séquence de synchronisation entre les sous-paquets de données (142_1: 142_n) de sorte que les sous-paquets de données (142_1:142_n) à (sous)-séquence de synchronisation plus longue contiennent une plus grande partie de données d'extension que les sous-paquets de données (142_1:142_n) à (sous)-séquence de synchronisation plus courte;
dans lequel le récepteur de données (110) est conçu pour déterminer les longueurs des parties de données d'extension qui sont contenues dans les sous-paquets de données (142_1:142_n) respectifs sur base des longueurs des (sous)-séquences de synchronisation qui sont contenues dans les sous-paquets de données (142_1:142_n) respectifs.

29. Récepteur de données (110) selon l'une des revendications 23 à 28,
dans lequel le récepteur de données (110) est configuré pour décoder et recoder une première zone de la partie respective des données de longueur variable (120) à l'aide des (sous)-séquences de synchronisation pour obtenir une première zone partielle de données recodées;
dans lequel le récepteur de données (110) est conçu pour décoder une deuxième zone de la partie respective des données (120) de longueur variable à l'aide de la première zone partielle de données recodées.

30. Récepteur de données (110) selon la revendication 29, dans lequel le récepteur de données (110) est conçu pour décoder la deuxième zone de la partie respective des données (120) de longueur variable à l'aide de la première zone partielle de données recodées pour obtenir une deuxième zone partielle de données recodées;
dans lequel le récepteur de données (110) est conçu pour décoder une troisième zone de la partie respective des données (120) de longueur variable à l'aide de la deuxième zone partielle de données recodées.

31. Récepteur de données (110) selon l'une des revendications 29 à 30, dans lequel la première zone est, dans les sous-paquets de données (142_1:142_n) respectifs, disposée immédiatement adjacente à la (sous)-séquence de synchronisation, et dans lequel la deuxième zone est disposée directement adjacente à la première zone.

32. Récepteur de données (110) selon l'une des revendications 17 à 31, dans lequel le nombre de sous-paquets de données est réparti entre au moins deux blocs indépendants (160_1:160_m) de sous-paquets de données (142_1:142_n) de sorte qu'un premier bloc des au moins deux blocs de sous-paquets de données (142_1:142_n) soit détectable en soi;
dans lequel le récepteur de données (110) est conçu pour détecter le premier bloc des au moins deux blocs de sous-paquets de données (142._1:142_n) en soi.

33. Récepteur de données (110) selon la revendication 32, dans lequel le premier bloc de sous-paquets de données des au moins deux blocs (160_1:160_m) de sous-paquets de données (142_1:142_n) est pourvu d'une information sur un deuxième bloc des au moins deux blocs (160_1:160_m) de sous-paquets de données (142_1:142_n);
dans lequel le récepteur de données (110) est conçu pour recevoir le deuxième bloc des au moins deux blocs (160_1:160_m) de sous-paquets de données (142_1:142_n) à l'aide de l'information.

34. Système, aux caractéristiques suivantes:
un émetteur de données (100) selon l'une des revendications 1 à 16; et
un récepteur de données (110) selon l'une des revendications 17 à 33.

35. Procédé (200) pour émettre de données de longueur variable, aux étapes suivantes consistant à:
répartir (202) les données de longueur variable entre un nombre prédéterminé de sous-paquets de données; et
émettre (204) les sous-paquets de données dans un intervalle de temps prédéterminé;
dans lequel les données de longueur variable présentent des données utiles;
**caractérisé par le fait qu'**un nombre de symboles des sous-paquets de données (142_1:142_n) individuels dépend d'une longueur des données de longueur variable.

36. Procédé (210) pour recevoir des données de longueur variable, aux étapes suivantes consistant à:
recevoir (212) un nombre prédéterminé de sous-paquets de données dans un intervalle de temps prédéterminé entre lesquels sont réparties les données de longueur variable;
dans lequel les données de longueur variable présentent des données utiles;
**caractérisé par le fait qu'**un nombre de symboles des sous-paquets de données (142_1:142_n) individuels dépend d'une longueur des données de longueur variable.

37. Programme d'ordinateur comportant des instructions qui, lorsque le programme est exécuté par un ordinateur, font que ce dernier réalise le procédé selon la revendication 35 ou la revendication 36.
